(19) Europäisches Patentamt
European Patent Office
Office européen des brevets

(11) **EP 2 350 572 B1**

(12) **EUROPÄISCHE PATENTSCHRIFT**

(45) Veröffentlichungstag und Bekanntmachung des Hinweises auf die Patenterteilung:
**10.05.2017 Patentblatt 2017/19**

(21) Anmeldenummer: **09771697.1**

(22) Anmeldetag: **13.11.2009**

(51) Int Cl.:
*G01D 5/48* *(2006.01)*   *F15B 15/28* *(2006.01)*
*G01S 13/88* *(2006.01)*   *G01S 7/02* *(2006.01)*
*G01S 13/38* *(2006.01)*

(86) Internationale Anmeldenummer:
**PCT/EP2009/008103**

(87) Internationale Veröffentlichungsnummer:
**WO 2010/066329 (17.06.2010 Gazette 2010/24)**

(54) **ABSTANDSMESSVORRICHTUNG UND VERFAHREN ZUR ERMITTLUNG EINES ABSTANDS IN EINER LEITUNGSSTRUKTUR**

DISTANCE MEASUREMENT DEVICE AND METHOD FOR DETERMINING A DISTANCE IN A LINE STRUCTURE

DISPOSITIF DE MESURE DE DISTANCE ET PROCÉDÉ DE DÉTERMINATION D'UNE DISTANCE DANS UNE STRUCTURE DE CONDUITE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **14.11.2008 DE 102008057298**
**09.12.2008 DE 102008061227**

(43) Veröffentlichungstag der Anmeldung:
**03.08.2011 Patentblatt 2011/31**

(73) Patentinhaber: **Astyx GmbH**
**85521 Ottobrunn (DE)**

(72) Erfinder:
• **TRUMMER, Guenther**
**91083 Baiersdorf (DE)**

• **GEHRING, Ralf**
**85622 Feldkirchen (DE)**

(74) Vertreter: **Kunz, Herbert et al**
**Fish & Richardson P.C.**
**Highlight Business Towers**
**Mies-van-der-Rohe-Straße 8**
**80807 München (DE)**

(56) Entgegenhaltungen:
**DE-A1- 10 205 904      DE-A1- 19 833 220**
**DE-A1-102006 021 205   DE-A1-102006 038 469**
**DE-A1-102006 052 790   DE-A1-102007 003 389**
**DE-A1-102007 020 046**

**Beschreibung**

Die vorliegende Erfindung betrifft eine Abstandsmessvorrichtung sowie ein Verfahren zur Ermittlung eines Abstands.

Unter anderem werden herkömmliche Abstandsmessvorrichtungen beispielsweise zur Detektion der Kolbenposition von Linearantrieben mit pneumatischen oder hydraulischen Zylindern eingesetzt. Die Kolbenpositionserfassung an Zylindern kann sowohl diskret, d. h. an diskreten Stellen, als auch kontinuierlich, d. h. ständig während des Betriebs, erfolgen.

Die diskrete Kolbenpositionsbestimmung wird in der Regel benötigt, um die Ausführung bzw. Beendigung einer Kolbenbewegung an eine Ablaufsteuerung (z .B . SPS) zurückzumelden, um somit beispielsweise den nächsten Ablaufschritt einleiten zu können.

Hierzu werden überwiegend magnetfeldempfindliche Sensoren bzw. Sensoreinrichtungen verwendet, welche das Magnetfeld eines Permanentmagneten, der sich an dem Zylinderkolben befindet, detektieren. Diese Art von Sensoren sind überwiegend als magnetfeldempfindliche Sensoren ausgeführt und sind als Reed-Schalter, magnetoresistive (MR), giant magnetoresistive (GMR) Schalter, Hall-Schalter oder magnetinduktive Näherungsschalter bekannt. Die dabei eingesetzten Sensoren werden extern an das Zylinderrohr des Kolbenzylinders montiert. Bewegt sich der Kolben in den Erfassungsbereich eines solchen Sensors, so erkennt dieser die Anwesenheit des Zylinderkolbens, durch das Zylinderrohr hindurch.

Soll hingegen eine andere Position detektiert werden, so muss der Sensor entsprechend mechanisch justiert werden. Für jede zusätzlich zu erfassende Position muss folglich ein weiterer Sensor montiert werden, und zwar mit den damit verbundenen zusätzlichen Material-, Montage-, Justage- und Installationskosten. Dies geschieht in der Regel vor Ort beim Kunden. Oft ist dabei der Zylinder bereits in eine schwer zugängliche Maschine eingebaut und die Einstellung der Schaltabstände durch mechanisches Verschieben der extern montierten Magnetschalter ist nicht mehr möglich.

Ferner wird für diese extern angebauten Sensoren zusätzlich Einbauraum benötigt. Damit die Zugänglichkeit und Robustheit des Sensors gewährleistet werden kann, ist häufig erhöhter konstruktiver Aufwand erforderlich. Die externe Montage der Sensoren ist nicht zufrieden stellend, da diese durch Fremdeinwirkung von außen zerstört werden könnten. Die Befestigung der am Zylinder montierten Sensoren könnte zerbrechen und die Sensoren zu Boden fallen. Eine Fehlermeldung und ein Stillstand des Fertigungsbands wären die Folge. 50% aller Ausfälle bei pneumatischen Antrieben ereignen sich auf oben genannte Art und Weise.

Zur kontinuierlichen Kolbenpositionsmessung werden gewöhnlich Meßsysteme verwendet, die potentiometrisch, magnetostriktiv oder nach dem LVDT-Prinzip (Linear Variable Differential Transformer) arbeiten. Die Kolbenposition wird bei diesen Systemen kontinuierlich und überwiegend als analoges Spannungssignal ausgegeben. Sensoren nach dem LVDT-Prinzip benötigen beim Einschalten immer eine Referenzfahrt. Als Ergänzung zu diesen Systemen sind auch inkrementale Wegmessungen bekannt. Diese Systeme werden beispielsweise durch die magnetische Kodierung der Kolbenstange realisiert und können somit nur zur relativen Wegmessung verwendet werden. Zudem werden beim Ausfahren der Kolbenstange vorhandene Metallspäne angezogen, die dann beim Einfahren der Kolbenstange die Dichtung zerstören. Magnetostriktive und potentiometrische Wegmesssysteme werden extern oder in der hohl zu bohrenden Kolbenstange montiert. Die hohle Kolbenstange schwächt den Antrieb und die externe Montage verursacht einen erheblichen logistischen Aufwand.

Sowohl die kontinuierliche als auch die diskrete Kolbenpositionsbestimmung können nicht bzw. nur mit erheblichem konstruktiven Aufwand und den dadurch verbundenen hohen Kosten in einen Zylinder integriert werden. Der erhebliche konstruktive Aufwand ist dadurch begründet, dass alle beschriebenen gängigen Sensorprinzipien auf die entsprechende Zylinderlänge angepasst werden müssen, da sie einen zu kurzen Erfassungsbereich besitzen.

Die Patentschrift PCT/EP03/00894 beschreibt die Integration eines Mikrowellensensors im pneumatisch/hydraulisch betriebenen Zylinderraum. Nachteile dieser Lösung bestehen darin, dass der Sensor mittig angeordnet ist und dieser Platz häufig für eine pneumatische Endlagendämpfung benötigt wird. Weitere Nachteile sind, dass

- der Kolben so ausgebildet sein muss, dass er ein möglichst ideales Hochfrequenzziel darstellt
- die Messgenauigkeit des Sensors wesentlich von der Anpassung der Koppelsonde abhängt
- das Messprinzip nur in der kolbenstangenlosen Zylinderhälfte funktioniert
- dielektrische Haltesysteme notwendig sind für die Befestigung der Antenne

Mit der im folgenden beschriebenem Sensorbauweise ist eine weitgehende Integration eines Wegsensors in einen Linearantrieb möglich, ohne dass die oben beschriebenen Nachteile einer direkten Integration in Kauf genommen werden müssen.

Aufgabe der vorliegenden Erfindung ist es somit, eine Abstandsmessvorrichtung und ein Verfahren zur Ermittlung des Abstands zu schaffen, welche bzw. welches die oben aufgeführten Nachteile überwindet und eine kontinuierliche und somit diskretisierbare Abstandsermittlung, eine einfache Handhabung und vielseitige Einsatzmöglichkeiten erlaubt.

Diese Aufgabe wird vorrichtungsgemäß mit den Merkmalen des Anspruchs 1 und verfahrensgemäß mit den Merkmalen des Anspruchs 12 gelöst.

Die erfindungsgemäße Abstandsmessvorrichtung zur Bestimmung der Kolbenposition in Zylindern besitzt folgende Eigenschaften:

- kontinuierliche, absolute Abstandsmessung mit einer besonders hohen Genauigkeit;
- vollständige Integration der Sende- und Empfangseinrichtung und der Auswerteelektronik im Zylinderdeckel, d.h. es gibt keine extern zu montierenden Teile. Des Weiteren ist keine mechanische Änderung der pneumatisch relevanten Teile des Zylinders, beispielsweise des Kolbens, der Endlagendämpfung, der Kolbenstange oder der Luftzuführung, erforderlich;
- die Abstandsmessvorrichtung ist unter Einhaltung vorhandener Normmaße einsetzbar;
- Schaltabstände sollen extern über eine elektronische Schnittstelle einstellbar sein (Teach-in Fähigkeit);
- universell einsetzbarer Sensor (Sende- und Empfangseinrichtung), unabhängig von der Zylinderlänge (X-Längenfähigkeit)
- Messergebnisse sind unabhängig vom Druck, Öl und Feuchtigkeit im Zylinder erstellbar;
- ein Sensor (Sende- und Empfangseinrichtung) für alle gängigen Zylinderdurchmesser.

Erfindungsgemäß wird eine Abstandsmessvorrichtung und ein Verfahren zur Ermittlung eines Abstands zur Verfügung gestellt, wobei die Sensoreinrichtung eine Hochfrequenzsende- und Empfangseinrichtung, einen Übergang von Koaxialleiter in einen Hohlleiter, welcher als Zylinder ausgebildet sein kann, ein Reflexionsziel und eine Auswerteeinheit aufweist. Die Sende-/Empfangseinrichtung dient dazu, durch Abstrahlen und Empfangen von Wellen, einen bestimmten Abstand in einer Hohlleitungsstruktur auszumessen.

Erfindungsgemäß wird darüber hinaus eine Abstandsmessvorrichtung zur Ermittlung eines Abstands zwischen einem Reflexionskörper in einer Leitungsstruktur und einem an einem Endabschnitt der Leitungsstruktur vorgesehenen Einkopplungspunkt für elektromagnetische Wellen, mit einer Sende- und Empfangseinrichtung mit einem am Einkopplungspunkt vorgesehenen Leitungsübergang zur koaxial-induktiven Kopplung der Sende- und Empfangseinrichtung mit der Leitungsstruktur, um eine elektromagnetische Welle in die Leitungsstruktur einzukoppeln und die am Reflexionskörper reflektierte elektromagnetische Welle aus der Leitungsstruktur auszukoppeln, und mit einer Auswerteeinrichtung zur Ermittlung des Abstands zwischen dem Einkopplungspunkt und dem Reflexionskörper aus der Phasendifferenz zwischen der eingekoppelten elektromagnetischen Welle und der ausgekoppelten elektromagnetischen Welle.

Erfindungsgemäß wird ein Verfahren geschaffen, womit die Länge der Leitungsstruktur bis zum Reflektionsziel gemessen wird. Das entsprechend dem anmeldungsgemäßen Verfahren bereitgestellte Sendesignal wird in eine Leitungsstruktur eingespeist, am Reflexionsziel reflektiert und über das Einspeisesystem wieder empfangen. Dadurch wird die Messung des Abstandes zwischen dem vom induktiven Hohlleiterübergang definierten Einkopplungspunkt und dem Reflexionsziel durchgeführt. Der zu messende Abstand erfolgt hierbei durch Messung der Phasendifferenz zwischen Sende- und Empfangssignal bei unterschiedlichen Frequenzen und Polarisationen der elektromagnetischen Welle.

Erfindungsgemäß wird ein Verfahren zur Ermittlung eines Abstands zwischen einem Reflexionskörper in einer Leitungsstruktur und einem an einem Endabschnitt der Leitungsstruktur vorgesehenen Einkopplungspunkt für elektromagnetische Wellen zur Verfügung gestellt, wobei das Verfahren die folgenden Verfahrensschritte umfasst:

- Einkopplung einer elektromagnetischen Welle in die Leitungsstruktur über einen koaxial-induktiven Leitungsübergang am Einkopplungspunkt,
- Auskopplung der am Reflexionskörper reflektierten elektromagnetischen Welle aus der Leitungsstruktur über den Leitungsübergang und
- Ermittlung des Abstands zwischen dem Einkopplungspunkt und dem Reflexionskörper aus der Phasendifferenz zwischen der eingekoppelten und der ausgekoppelten elektromagnetischen Welle.

Die Erfindung weist insbesondere folgende Vorteile auf:

- Sämtliche Komponenten des Sensorsystems sind derart klein ausgebildet, dass nahezu keine bzw. geringe Umbaumaßnahmen für die Integration im Zylinder erforderlich sind;
- die Sensoreinrichtung kann vollständig im Enddeckel eines Pneumatikzylinders untergebracht werden;
- der gesamte Aufbau der anmeldungsgemäßen Abstandsvorrichtung weist somit ein sauberes, glattes Design aufgrund des Wegfalls einer Montagemöglichkeit für externe Sensoreinrichtungen auf und beeinflusst die äußere Erscheinung nicht.

Die abhängigen Ansprüche stellen zweckmäßige Weiterbildungen der erfindungsgemäßen Vorrichtung und des erfindungsgemäßen Verfahrens dar. Erfindungsgemäß ist die Leitungsstruktur als Hohlzylinder ausgebildet ist. In zweckmäßiger Weiterbildung ist der Hohlzylinder als pneumatischer oder hydraulischer Zylinder ausgebildet ist. Zweckmäßigerweise ist im Hohlzylinder ein Kolben vorgesehen, welcher als Reflexionskörper fungiert.

Gemäß vorteilhafter Weiterbildung erfolgt die Einkopplung der elektromagnetischen Welle in die Leitungsstruktur im Frequenzbereich zwischen 1 MHz und 100 GHz in Form einer monomodigen elektromagnetischen Welle. Zweckmäßigerweise erfolgt die Einkopplung der elektromagnetischen Welle in die Leitungsstruktur im H11- oder E01-Mode oder bei koaxialer Leiterstruktur, insbesondere bei im Zylinder durchgehend ausgebildeten Kolbenstangen, im TEM-Mode.

Um eine linear polarisierte, elektromagnetische Welle im E01-Mode zu erzeugen, wird zweckmäßigerweise eine Koaxialwelle in die Leitungsstruktur über einen elektrisch leitenden, induktiven Modentransformator des Leitungsübergangs oder über zwei oder vier elektrisch leitende, induktive Modentransformatoren des Leitungsübergangs gleichphasig eingekoppelt.

Um eine horizontal oder vertikal linear polarisierte, elektromagnetische Welle in die Leitungsstruktur einzukoppeln, weist der Leitungsübergang in zweckmäßiger Weiterbildung einen elektrisch leitenden, induktiven Modentransformator auf.

Zweckmäßigerweise weist der Leitungsübergang zwei elektrisch leitende, induktive Modentransformatoren auf, welche um 180 Grad zueinander versetzt auf einer Kreisbahn eines im Bereich des Endabschnitts vorgesehenen Kreises angeordnet und worüber linear polarisierte, elektromagnetische Wellen, welche zueinander um 180 Grad phasenverschoben sind, in die Leitungsstruktur einkoppelbar ist.

In zweckmäßiger Weiterbildung weist der Leitungsübergang zwei elektrisch leitende, induktive Modentransformatoren auf, welche um 90 Grad zueinander versetzt auf einer Kreisbahn eines im Bereich des Endabschnitts vorgesehenen Kreises angeordnet und worüber vertikal bzw. horizontal polarisierte, elektromagnetische Wellen parallel in die Leitungsstruktur einkoppelbar sind.

Gemäß vorteilhafter Weiterbildung weist der Leitungsübergang vier elektrisch leitende, induktive Modentransformatoren auf, welche um 90 Grad zueinander versetzt auf einer Kreisbahn eines im Bereich des Endabschnitts vorgesehenen Kreises angeordnet sind, und wobei vertikal polarisierte, elektromagnetische Wellen, welche zueinander um 180 Grad phasenverschoben sind, über zwei zueinander um 180 Grad versetzte Modentransformatoren und horizontal polarisierte, elektromagnetische Wellen, welche zueinander um 180 Grad phasenverschoben sind, über zwei zueinander um 180 Grad versetzte Modentransformatoren, welche zu den Modentransformatoren für die vertikal polarisierten, elektromagnetischen Wellen um jeweils 90 Grad versetzt sind, parallel in die Leitungsstruktur einkoppelbar sind.

Zweckmäßigerweise weist der Leitungsübergang zwei elektrisch leitende, induktive Modentransformatoren auf, welche um 90 Grad zueinander versetzt auf einer Kreisbahn eines im Bereich des Endabschnitts vorgesehenen Kreises angeordnet und worüber zirkular polarisierte, elektromagnetische Wellen, welche zueinander um 90 oder 180 Grad phasenverschoben sind, in die Leitungsstruktur einkoppelbar sind. Zirkular polarisierte Welle lässt sich auch mit vier um 90 Grad versetzte Modentransformatoren erzeugen. Allerdings sind dann die an den Modentransformatoren z.B. im Uhrzeigersinn eingespeisten Signale jeweils um 90 Grad zueinander phasenverschoben. Erfindungsgemäß ist der jeweilige Modentransformator als mechanische Treppenstufe ausgebildet. Zudem ist die mechanische Treppenstufe mit abnehmender Stufenhöhe in Richtung des Reflexionskörpers an der Leitungsstruktur angeordnet. Zweckmäßigerweise ist die jeweilige Treppenstufe zwei-, drei-, vier- oder mehrstufig ausgeführt.

Um die Sende- und Empfangseinrichtung mit der Leitungsstruktur zu koppeln, weist Leitungsübergang zweckmäßigerweise die Kontaktierung zwischen dem jeweiligen Modentransformator und einem koaxialen Innenleiter auf, welcher leitungsstrukturendseitig in die Rückfläche der höchsten Stufe der mechanischen Treppenstufe des Modentransformators eingesteckt ist. Zweckmäßigerweise ist zwischen der Rückfläche der höchsten Stufe der mechanischen Treppenstufe und einer als Endabschnitt ausgebildeten Deckelrückwand der Leitungsstruktur ein Abstand von einigen Millimetern vorgesehen.

Um bei zirkularer Polarisation die links- oder rechtsdrehende, elektromagnetische Welle in eine horizontal bzw. vertikal, polarisierte, elektromagnetische Welle umzuwandeln, weist die Sende- und Empfangseinrichtung zweckmäßigerweise für den jeweiligen Modentransformator einen Branchline-Koppler und einen diesem nachgeschalteten Koppler mit 3dB-Kopplung und mit einer Phasendrehung von 180 Grad auf. Hierdurch ist das Zielecho einer zirkular polarisierten, elektromagnetischen Welle, welche am Reflexionskörper in Totalreflexion und einer damit einhergehenden Änderung der zirkularen Drehrichtung, d.h. von links- auf rechtsdrehend oder von rechts- auf linksdrehend, reflektiert wurde, von Störechos, welche keiner Totalreflexion unterliegen, trennbar.

Um vertikal und horizontal polarisierte, elektromagnetische Wellen gleichzeitig zu erfassen, weist die Sende- und Empfangseinrichtung gemäß vorteilhafter Weiterbildung einen 2-Kanal-Empfänger auf.

Zweckmäßig sind die induktiven Modentransformatoren für Mehrfachkolbensysteme mit mindestens einem Außenkolben und mindestens einem Innenkolben dazu ausgebildet, zur Detektion des Abstands zwischen dem Außenkolben bzw. dem Innenkolben und dem Einkopplungspunkt sowohl die vom Außenkolben reflektierte als auch die vom Innenkolben reflektierte elektromagnetische Welle auszukoppeln.

Um die Einschwingstrecke einer eingekoppelten elektromagnetischen Welle in einer Mode zu verkürzen, ist zwischen dem Reflexionskörper und den Modentransformatoren zweckmäßigerweise eine an diese anschließende dielektrische Scheibe, vorzugsweise aus Lexan, PPS 40 oder Teflon, über den gesamten Innendurchmesser der Leitungsstruktur vorgesehen.

Gemäß vorteilhafter Weiterbildung ist die dielektrische Scheibe mittig mit einem Innenrohr versehen, so dass ein Dämpfungskolben in das Innenrohr eintauchen kann. Zweckmäßigerweise ist das Innenrohr metallisch ausgeführt.

Um den Lauf des Kolbens in Richtung des Leitungsübergangs einzuschränken ist in der Leitungsstruktur ein Kolbenanschlag vorgesehen, welcher als zwei Viertelkreisringe mit der Leitungsstruktur zusammenwirkt. In zweckmäßiger Weiterbildung dient die dielektrische Scheibe als Kolbenanschlag.

Gemäß vorteilhafter Weiterbildung ist die Abstandsmessvorrichtung als Abschluss, Enddeckel bzw. Endabschnitt der Leitungsstruktur ausgebildet, so dass eine als Hohlzylinder ausgebildete Leitungsstruktur besonders einfach und mit besonders hoher Kosten- und Zeitersparnis mit der Abstandsmessvorrichtung versehen werden kann. Zur Umrüstung eines Hohlzylinders ist lediglich die dem Kolben gegenüberliegende, als Leitungsabschluss bzw. Endabschnitt fungierende Rückwand aufwandsarm durch die Abstandsmessvorrichtung zu ersetzen. Ansonsten sind keine Umrüstungen und/oder Anpassungen an der Leitungsstruktur bzw. am Hohlzylinder erforderlich.

Für die Umrüstung sowie für Wartungen und Reparaturen der Leitungsstruktur und/oder der Abstandsmessvorrichtung sowie für den Austausch der Abstandsmessvorrichtung an der Leitungsstruktur ist es zweckmäßig, die Befestigung der Abstandsmessvorrichtung an der Leitungsstruktur derart vorzusehen, dass die Abstandsmessvorrichtung von der Leitungsstruktur gelöst werden kann. Dadurch kann die Abstandsmessvorrichtung vor der Endmontage am Hohlzylinder und/oder vor der Auslieferung vollständig gefertigt und getestet werden.

Zur Halterung der Abstandsmessvorrichtung in der Leitungsstruktur ist es zweckmäßig, an der dem Reflexionskörper zugewandten Seite einen Absatz an der Leitungsstruktur vorzusehen, welcher als Anschlag mit der in die Leitungsstruktur eingeführten Abstandsmessvorrichtung zusammenwirkt, so dass die Abstandsmessvorrichtung nur bis zu dem Absatz in die Leitungsstruktur einführbar ist.

Um sicher zu gehen, dass die Abstandsmessvorrichtung als Leitungsabschluss zuverlässig in der Leitungsstruktur verbleibt, und um die Abstandsmessvorrichtung gegen Verrutschen in der Leitungsstruktur zur sichern, ist es zweckmäßig, an der dem Reflexionskörper abgewandten Seite in der Leitungsstruktur einen Klemmring vorzusehen.

Gemäß vorteilhafter Weiterbildung wirkt der Klemmring mit der Leitungsstruktur über eine in der Leitungsstruktur vorgesehene Einkerbung zusammen, worin der Klemmring teilweise eingesetzt ist. Zudem ist der Klemmring zweckmäßigerweise derart dimensioniert, dass ein Verrutschen der Abstandsmessvorrichtung auf der dem Reflexionskörper abgewandten Seite in der Leitungsstruktur vermieden wird.

In zweckmäßiger Weiterbildung wird die Abstandsmessvorrichtung in der Leitungsstruktur durch mindestens einen Sicherungsstift und/oder mindestens eine Schraube gehaltert. In vorteilhafter Weiterbildung wirkt der Sicherungsstift und/oder die Schraube über eine Bohrung in der Leitungsstruktur mit der Leitungsstruktur und über einer Bohrung in der Abstandsmessvorrichtung mit der Abstandsmessvorrichtung zusammen.

Um eine besonders zuverlässige Halterung der Abstandsmessvorrichtung in der Leitungsstruktur zu schaffen, sind zweckmäßigerweise mehrere Sicherungsstifte und/oder mehrere Schrauben vorgesehen, welche jeweils in Bohrungen der Leitungsstruktur und der Abstandsmessvorrichtung versenkt bzw. mit der Leitungsstruktur und/oder der Abstandsmessvorrichtung verschraubt sind.

Bei einer als Hohlzylinder ausgebildeten Leitungsstruktur sind die mehreren Sicherungsstifte und/oder die mehreren Schrauben zweckmäßigerweise auf einer dem Mantel des Hohlzylinders folgenden Kreisbahn im Wesentlichen gleichmäßig verteilt vorgesehen.

Zur Abdichtung des Hohlraums in der Leitungsstruktur zwischen dem Reflexionskörper am Kolben und der Abstandsmessvorrichtung ist zwischen der Abstandsmessvorrichtung und der Leitungsstruktur zweckmäßigerweise mindestens eine Dichtung und Vorteilhafterweise zwei Dichtungen vorgesehen, wobei eine der Dichtungen als Druckdichtung und die andere der Dichtungen als Hochfrequenzdichtung fungiert. In vorteilhafter Weiterbildung sind die Dichtungen als Dichtungsringe ausgebildet.

Gemäß vorteilhafter Weiterbildung werden mit der elektromagnetischen Welle Sendesignale mit unterschiedlichen Sendefrequenzen eingekoppelt. Um beispielsweise einen großen Messbereich abzudecken, werden die Sendefrequenzen zweckmäßigerweise derart gewählt, dass die Differenz zwischen den Sendefrequenzen klein ist, z. B. 1 % Differenz vom Absolutwert. Um beispielsweise hohe Störsicherheit zu erzielen, werden die Sendefrequenzen gemäß vorteilhafter Ausgestaltung derart gewählt werden, dass die Differenz zwischen den Sendefrequenzen groß ist, z. B. 20% Differenz vom Absolufinrert.

Zweckmäßigerweise werden die über die elektromagnetische Welle ausgestrahlten Sendesignale kontinuierlich abgegeben. Gemäß vorteilhafter Ausgestaltung werden mit der elektromagnetischen Welle als CW-Signale ausgebildete Sendesignale eingekoppelt.

In zweckmäßiger Weiterbildung werden vertikal und horizontal polarisiert ausgebildete elektromagnetische Wellen parallel ausgewertet.

Der Sender besteht aus einem VCO der über ein Koaxialkabel die elektromagnetische Welle induktiv in den Hohlleiter einspeist. Ein Teil der Sendeleistung wird resistiv ausgekoppelt und dem/den Empfangsmischern als Lokaloszillator zur Verfügung gestellt. Ebenso wird das Empfangssignal mittels Koppler aus dem Sendekanal ausgekoppelt, da die Einspeiseanordnung sowohl für den Sender als auch Empfänger benutzt wird. Dabei wird durch einen Modentransformator die koaxiale Welle durch induktive Ankopplung des Hohlleiters in den H11 Wellentyp des Hohlleiters gewandelt. Die Kontaktierung erfolgt, indem der Koaxinnenleiter an der Stirnseite des Modenwandlers z. B. durch Einschieben in eine Bohrung befestigt wird. Zwischen der metallischen Deckelabschlusswand und dem Modenwandler besteht ein Abstand im Millimeterbereich. Über die Anzahl der Modenwandler lässt sich eine unterschiedliche Polarisation der Welle und die Anregung von Wellen höherer Moden wie folgt bestimmen:

H11 - lineare Polarisation mit einem Modenwandlern:

Durch diese unsymmetrische, induktive Koax-Hohlleitereinspeisung werden jedoch nicht nur Wellen des Wellentypes H11 sondern auch alle der Periodizät folgenden H Moden angeregt.
Aufgrund der vorgegebenen Randbedingung des Außendurchmessers des Hohlleiters (aperiodische Dämpfung von Hohlleitermoden abhängig der spezifischen Grenzfrequenz) kann sich jedoch nur nach einer entsprechenden Laufstrecke ( Einschwingverhalten) der H11-Mode ausbreiten und Energie transportieren.

H11 - lineare Polarisation mit zwei Modenwandlern:

Durch Hinzufügen einer weiteren um 180 Grad gespiegelten induktiven Koax-Hohlleitereinspeisung wird eine symmetrische Anregung erzwungen und die Anzahl der angeregten Moden und damit auch die benötigte Laufstrecke verkürzt. Grundvoraussetzung dieser Anregung ist jedoch die um 180° phasenverschobene Einkopplung der beiden Signale im koaxialen Leitungssystem.

Durch Nutzung der Orthogonalität der H11 Hohlleiterwelle:

H11x-H11y:

Durch Nutzung der Orthogonalität der H11 Hohlleiterwelle, d.h. der theoretisch vollkommen entkoppelten Ausbreitung zweier gleicher Hohlleiterwellen des Typs H11x und H11y kann ein redundanten 2. Signal innerhalb des Systems verwendet werden. Dadurch kann die Betriebssicherheit und auch die Messgenauigkeit erhöht werden.
Wie bei der Einfachnutzung des H11 Wellentyps sind auch bei der dualen Nutzung der einfache oder zweifache Modenwandler verwendbar, d.h. bei H11x-H11y - linearer Polarisation (vertikal und horizontal) mit jeweils einem Modenwandler und bei H11x-H11y - linearer Polarisation (vertikal und horizontal) mit jeweils zwei Modenwandlern.

Zirkulare Polarisation:

Aufgrund der Orthogonalität des H11x und H11y Wellentypes ist jedoch noch neben der Nutzung der dualen linearen Polarisation auch die Nutzung einer zirkularen Polarisation möglich.
Die Zirkulare Polarisation wird durch Anregung der beiden orthogonalen Wellentypen mit einem um 90° phasenverschobenen Signal erzeugt.
Zusätzlich muss jedoch auch die Anregung durch eine zweite um 90° gedrehte Einkopplung erzeugt werden.
Durch Nutzung der zirkularen Anregung sind folgende Betriebszustände möglich:

- H11x-H11y - Zirkuläre Polarisation mit jeweils zwei Modenwandlern (die Modenwandler sind kreisförmig um 90 Grad versetzt angeordnet);
- H11x-H11y - Zirkulare Polarisation mit jeweils vier Modenwandlern(die Modenwandler sind auf einer Kreisbahn eines Kreisesum jeweils 90 Grad zueinander versetzt angeordnet).

Zusätzlicher Betriebsmodus durch Nutzung des E01 Wellentyps:

Wie bereits angesprochen ist grundsätzlich durch die Anwendung des Koax-Hohlleitermodenwandlers die Anregung aller Moden möglich, sofern diese durch entsprechende Gewährleistung der Randbedingungen ausbreitungsfähig sind.
Ein weiterer Wellentyp der durch eine Änderung der Randbedingung ( Durchmesser des Hohlleiters) und der entsprechenden Anregungssignale innerhalb des Systems benutzt werden kann ist der E01 Wellentyp.
Bei der Anregung und Ausbreitung gelten die gleichen Aussagen wie bei dem betrachteten H 11 Wellentyp.
Ein E01 Wellentyp kann durch folgende Konfigurationen angeregt werden:

- E01 Polarisation mit einem Modenwandlern;
- E01 Polarisation mit zwei Modenwandlern (90° gedreht, gleichphasige Anregung);
- E01 Polarisation mit zwei Modenwandlern (180° gedreht, gleichphasige Anregung);
- E01 Polarisation mit vier Modenwandlern (4 x 90° gedreht, gleichphasige Anregung).

Zudem gilt die allgemeine Grundvoraussetzung, dass der Hohlleiterdurchmesser an die E01 Grenzfrequenz angepasst ist.

Funktionsweise bei Zylinder mit durchgehender Kolbenstange:

Bei Zylindern mit durchgehender Kolbestange wird vorzugsweise der TEM-Mode angeregt. Die Anregung des H11-Mode ist ebenso möglich. Auch bei dieser Konfiguration ist der vorgestellte, induktive Modenwandler einsetzbar.

Bandbreite und Anpassung des Modenwandlers:

Die Bandbreite des Modenwandlers ist durch die Güte der Anpassung der entsprechenden Wellentypen zueinander bestimmt.
Die Anpassung wird durch eine Impedanztransformation erzielt.
Diese Bandbreite der Transformation kann durch die Anzahl der verwendeten Transformationsstufen (mechanisch: Anzahl der Stufen der treppenförmigen, induktiven Hohlleiterankopplung) gesteuert werden. Die Anzahl der Transformationsstufen generiert hierbei eine entsprechende Baulänge des Modenwandlers. Eine ausreichende Anpassung lässt sich jedoch unter gewissen Bedingungen auch schon mit einer Transformationsstufe erreichen.
Verkürzung der Einschwingstrecke durch ein dielektrisches Fenster (Scheibe): Aufgrund der vorgegebenen Randbedingung des Außendurchmessers des Hohlleiters (aperiodische Dämpfung von Hohlleitermoden abhängig der spezifischen Grenzfrequenz) kann sich jedoch nur nach einer entsprechenden Laufstrecke (Einschwingverhalten) der H11-Mode ausbreiten und Energie transportieren. Diese Laufstrecke kann entsprechend verkürzt werden, wenn ein dielektrisches Fenster in Form einer Scheibe mit einer Dielektrizitätszahl mit einem Wert von viel größer als 1 direkt den Modentransformatoren folgt. Als Material kann vorzugsweise PPS 40, Lexan oder Teflon verwendet werden. Die dielektrische Scheibe kann gleichzeitig so ausgelegt werden, dass sie als mechanischer Kolbenanschlag dient.

Pneumatische Endlagendämpfung:

Die dielektrische Scheibe kann so ausgeformt werden, dass sie eine hutförmige Ausgestaltung annimmt. Die Ausbuchtung in der Mitte ist geeignet, dass ein als Fortsatz der Kolbenstange montierter Dämpfungskolben einfahren kann. Gleichzeitig ist ein in der Bewegungsachse des Kolbens beweglicher Dichtring vorgesehen. Das Rohr zur Aufnahme des Dämpfungskolbens kann auch metallisch ausgeführt werden. Auch unter dieser Bedingung ist die Einkopplung der elektromagnetischen Welle möglich.

Mechanischer Endanschlag:

Als mechanischer Endanschlag für den Kolben kann auch eine zweischalige Viertelkreisanordnung dienen.

Ausführungsbeispiele:

Nachfolgend werden Ausführungsbeispiele der Erfindung anhand einer Zeichnung näher erläutert. Darin zeigen:

Fig. 1          in perspektivischer Darstellung eine Ausführungsform der Abstandsmessvorrichtung mit einem Leitungsübergang mit einem Modentransformator an einem Zylinder;

Fig. 2A          in perspektivischer Darstellung Ausführungsformen der Abstandsmessvorrichtung mit einem Leitungsübergang mit zwei zweistufigen Modentransformatoren an einem Zylinder;

Fig. 2B          in perspektivischer Darstellung Ausführungsformen gemäß Fig. 2A mit zwei dreistufigen Modentransformatoren;

Fig. 2C          in perspektivischer Darstellung Ausführungsformen gemäß Fig. 2A mit zwei vierstufigen Modentransformatoren;

Fig. 2D — Graph zur Anpassung der Leitungsübergänge mit Modentransformatoren mit unterschiedlicher Stufenanzahl in den Ausführungsformen gemäß Figuren 2A, 2B und 2C;

Fig. 3A — in perspektivischer Darstellung eine Ausführungsform der Abstandsmessvorrichtung mit einem Leitungsübergang mit zwei zueinander um 90 Grad versetzten Modentransformatoren an einem Zylinder;

Fig. 3B — eine schematische Darstellung des Leitungsübergangs gemäß der Ausführungsform nach Fig. 3A;

Fig. 4A — in perspektivischer Darstellung eine Ausführungsform der Abstandsmessvorrichtung mit einem Leitungsübergang mit zwei zueinander um 180 Grad versetzten Modentransformatoren an einem Zylinder;

Fig. 4B — eine schematische Darstellung des Leitungsübergangs gemäß der Ausführungsform nach Fig. 4A zur Einkopplung einer linear polarisierten, elektromagnetischen Welle;

Fig. 5A — in perspektivischer Darstellung eine Ausführungsform der Abstandsmessvorrichtung mit einem Leitungsübergang mit vier zueinander um 90 Grad versetzten Modentransformatoren an einem Zylinder;

Fig. 5B,5C — schematische Darstellungen des Leitungsübergangs gemäß der Ausführungsform nach Fig. 5A zur Einkopplung einer zweifach linear polarisierten bzw. zweifach zirkular polarisierten, elektromagnetischen Welle;

Fig. 6A — in perspektivischer Darstellung eine Ausführungsform der Abstandsmessvorrichtung mit einem Leitungsübergang mit vier zueinander um 90 Grad versetzten Modentransformatoren an einem Zylinder;

Fig. 6B — eine schematische Darstellung des Leitungsübergangs gemäß der Ausführungsform nach Fig. 6A zur Einkopplung einer linear polarisierten elektromagnetischen Welle im E01-Mode;

Fig. 7A — in Schnittdarstellung eine Ausführungsform der Abstandsmessvorrichtung mit einem Leitungsübergang und dielektrischer Scheibe an einem Zylinder;

Fig. 7B — Graph zur Anpassung des Leitungsübergangs mit dielektrischer Scheibe in der Ausführungsform gemäß Fig. 7A;

Fig. 8A,8B — in Schnittdarstellung Ausführungsformen der Abstandsmessvorrichtung an einem Zylinder mit durchgehender Kolbenstange;

Fig. 8C,8D — Graph zur Leitungsanpassung bei Einkopplung einer elektromagnetischen Welle in der TEM-Mode bzw. in den H11x-H11y-Moden in den Zylinder gemäß der in Figuren 8A, 8B gezeigten Ausführungsformen;

Fig. 9A — in perspektivischer Darstellung eine Ausführungsform der Abstandsmessvorrichtung an einem Zylinder mit Doppelkolbenstangen;

Fig. 9B — in Schnittdarstellung eine Ausführungsform der Abstandsmessvorrichtung an einem Zylinder mit Doppelkolbenstangen;

Fig. 10A, 10B — in Schnittdarstellung Ausführungsformen der Abstandsmessvorrichtung mit einem Leitungsübergang und kragenförmig ausgebildeter dielektrischer Scheibe an einem Zylinder;

Fig. 11A, 11B — in Schnittdarstellung Ausführungsformen der Abstandsmessvorrichtung gemäß Figuren 10A und 10B, wobei der Kragen metallisch ausgebildet ist;

Fig. 12 — in Explosionsdarstellung eine Ausführungsform einer Abstandsmessvorrichtung zum Ersatz eines Enddeckels an einem Hohlzylinder;

Fig. 13 — in Schnittdarstellung die Ausführungsform gemäß Fig. 12 mit der im Hohlzylinder eingesetzten und über einen Klemmring fixierten Abstandsmessvorrichtung;

Fig. 14        in Explosionsdarstellung eine weitere Ausführungsform einer Abstandsmessvorrichtung zum Ersatz eines Enddeckels an einem Hohlzylinder;

Fig. 15        in Schnittdarstellung die Ausführungsform gemäß Fig. 14 mit der im Hohlzylinder eingesetzten und über Schrauben am Hohlzylinder fixierten Abstandsmessvorrichtung;

Fig. 16        in perspektivischer Darstellung die Ausführungsform gemäß Fig. 15; und

Fig. 17        in Explosionsdarstellung die Ausführungsform gemäß Fig. 15.

Die beigefügte Zeichnung veranschaulichen mehrere, im folgenden beschriebenen Ausführungsbeispiele für die Anordnung der Modentransformatoren zur Erzeugung der unterschiedlichen Polarisation der elektromagnetischen Welle und die phasen- und amplitudengemäße Aufbereitung der elektromagnetischen Welle. Einander entsprechende Teile sind in allen Figuren mit den gleich Bezugszeichen versehen.

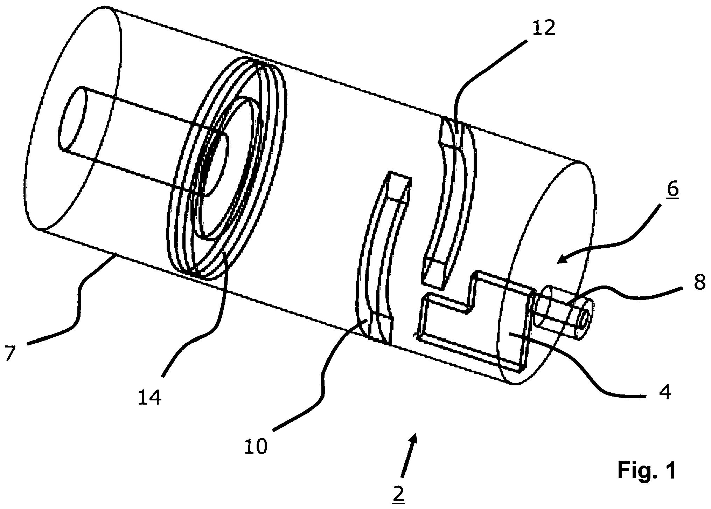

Fig. 1 zeigt eine perspektivische Darstellung einer Ausführungsform der Abstandsmessvorrichtung 2 mit einem als Modentransformator 4 ausgebildeten Leitungsübergang 6 für die Einkopplung einer koaxialen Welle in eine linear polarisierte Hohlleiterwelle im H11-Mode in den Zylinder 7 mittels des Modentransformators 4. Gezeigt ist ein zweistufiger Modentransformator 4 sowie die koaxiale Einkopplung 8. Auch dargestellt ist ein zweischaliger, mechanischer Kolbenanschlag 10, 12, welcher insbesondere den Modentransformator 4 vor einem Zusammenstoß mit dem Kolben 14 schützt.

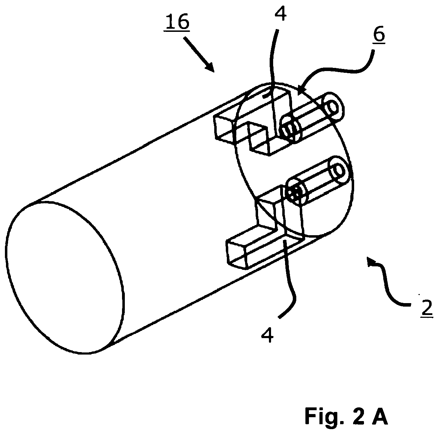

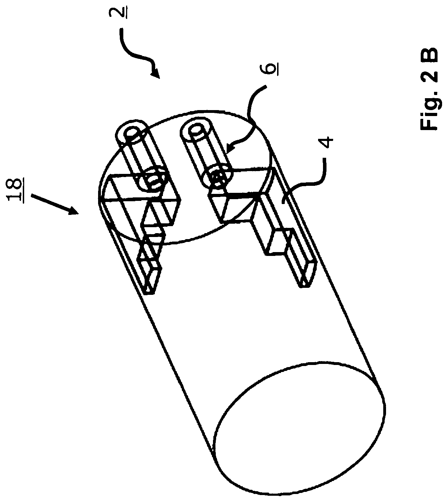

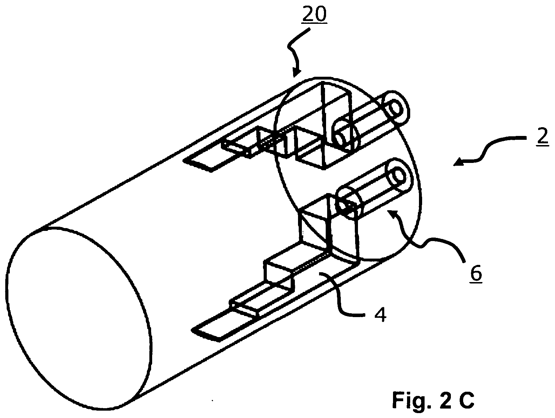

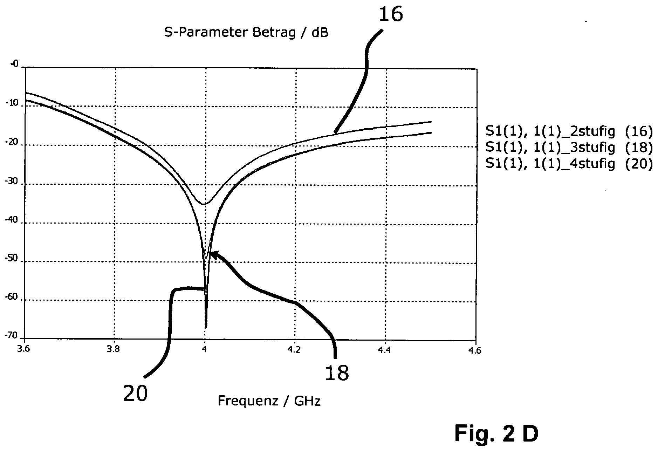

Figuren 2A, 2B und 2C zeigen unterschiedliche Ausführungsformen der Abstandsmessvorrichtung mit einem als induktiver Modentransformator 4 ausgebildeten Leitungsübergang 6. Mit zunehmender Anzahl von Transformationsstufen verbessert sich die Anpassung (Fig. 2D). Gezeigt ist ein zwei-(16), drei- (18), und vierstufiger (20) Modentransformator 4 (Figuren 2A, 2B bzw. 2C).

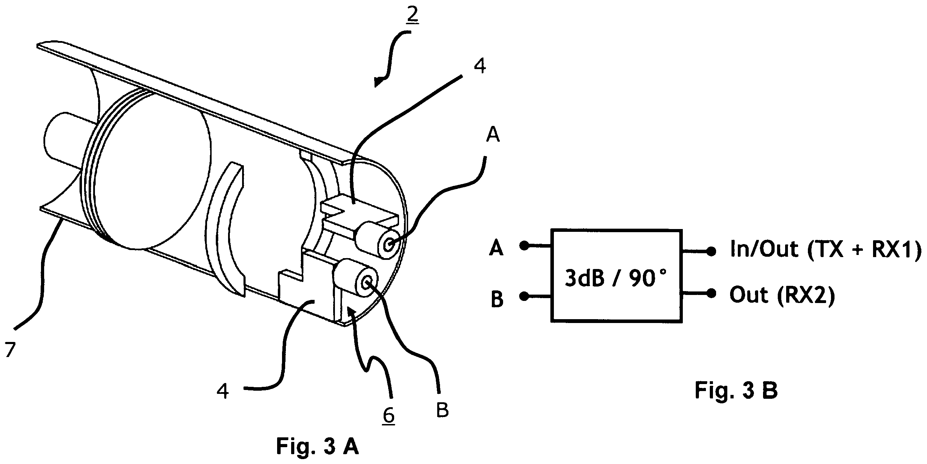

Fig. 3A zeigt in perspektivischer Darstellung eine Ausführungsform der Abstandsmessvorrichtung 2 mit einem Leitungsübergang 6 mit zwei zueinander um 90 Grad versetzte Modentransformatoren 4 für die parallele Einkopplung einer koaxialen Welle und die Transformation in zwei linear polarisierte Hohlleiterwellen (horizontal und vertikal) im H11-Mode. Die beiden Modentransformatoren 4 sind um 90 Grad mechanisch auf einer Kreisbahn eines im Endabschnitt des Zylinders 7 vorgesehenen Kreises versetzt angeordnet.

Fig. 3B zeigt eine schematische Darstellung des Leitungsübergangs mit einer 3dB-Kopplung und einer Phasendifferenz von 90 Grad zwischen den elektromagnetischen Wellen gemäß der Ausführungsform nach Fig. 3A.

Die in Fig. 3A gezeigte Anordnung wird auch verwendet um eine zirkular polarisierte Welle zu erzeugen. Die Einkopplung erfolgt dann jedoch mit zwei um 90 oder 180 Grad in der Phase verschobenen Wellen.

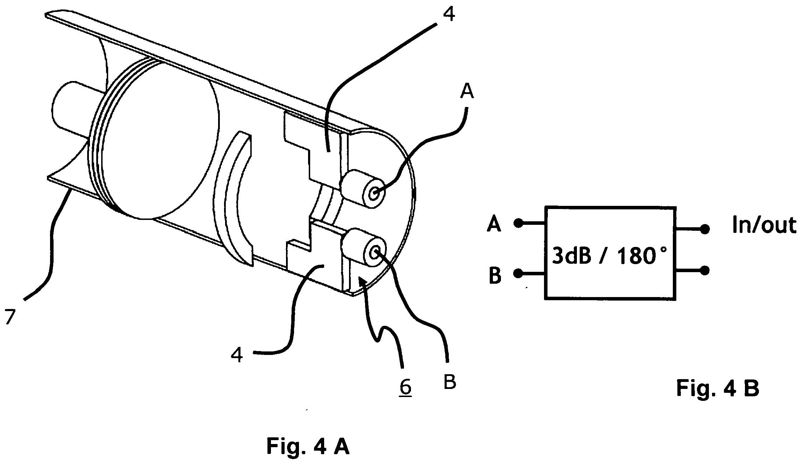

Fig. 4A zeigt in perspektivischer Darstellung eine Ausführungsform der Abstandsmessvorrichtung 2 mit einem Leitungsübergang 6 mit zwei zueinander um 180 Grad versetzten Modentransformatoren 4 an einem Zylinder 7 für die Einkopplung einer koaxialen Welle und Transformation in eine linear polarisierte Hohlleiterwelle im H11-Mode. Es erfolgt die Einkopplung der Welle in zwei Modentransformatoren 4, die mechanisch um 180 Grad versetzt angeordnet sind. Die an den Modentransformatoren 4 eingekoppelten Wellen besitzen zudem eine Phasenverschiebung von 180 Grad, wie zusätzlich in Fig. 4B schematisch veranschaulicht.

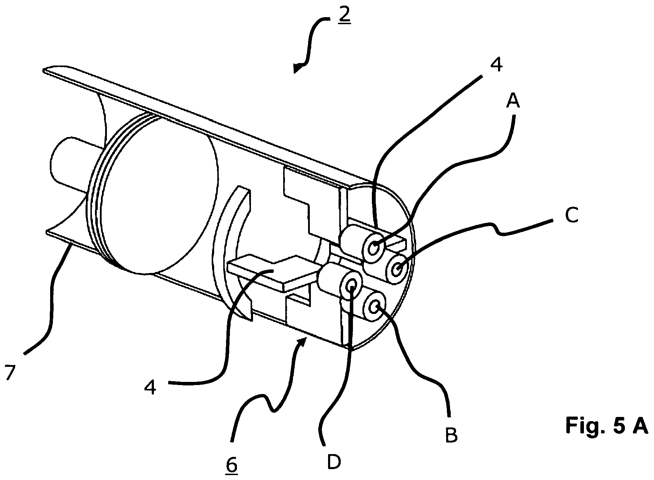

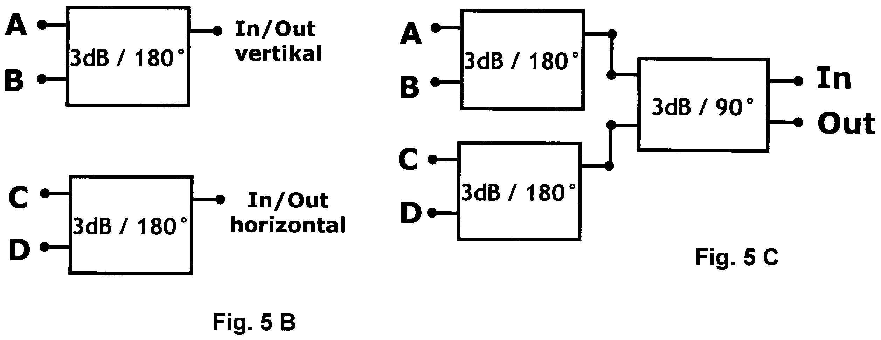

Fig.5A zeigt in perspektivischer Darstellung eine Ausführungsform der Abstandsmessvorrichtung 2 mit einem Leitungsübergang 6 mit vier zueinander um 90 Grad versetzten Modentransformatoren 4 an einem Zylinder 7 für die Einkopplung einer koaxialen Welle und die Transformation in zwei linear polarisierte Hohlleiterwellen bzw. in eine bzw. zwei zirkular polarisierte Hohlleiterwelle jeweils im H11-Mode. Es erfolgt die Einkopplung der elektromagnetischen Welle in vier Modentransformatoren 4, die mechanisch jeweils um 90 Grad versetzt sind. Dabei wird die zweifach lineare Einkopplung dadurch erzeugt, dass beispielsweise die vertikal polarisierte Welle in den Modentransformator 4 bei 0 Grad (A) und 180 Grad (B) mit einer Phasenverschiebung von 180 Grad eingespeist wird und die horizontal polarisierte Welle in den Modentransformator 4 bei 90 Grad (C) und 270 Grad (D) mit einer Phasenverschiebung von 180 Grad (Fig. 5B).

Die einfach bzw. zweifach zirkular polarisierte Welle wird dadurch erzeugt, dass über vier auf einer Kreisbahn eines Kreisesangeordneten Modentransformatoren die elektromagnetische Welle mit z. B. im Uhrzeigersinn mit einer Phasenverschiebung von 90 Grad eingespeist werden. (Fig. 5C).

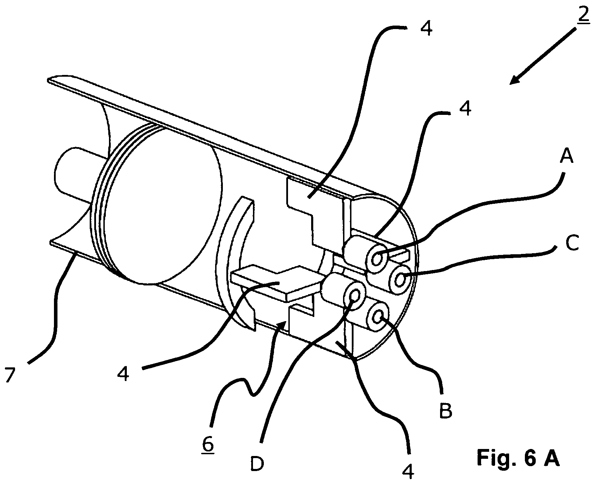

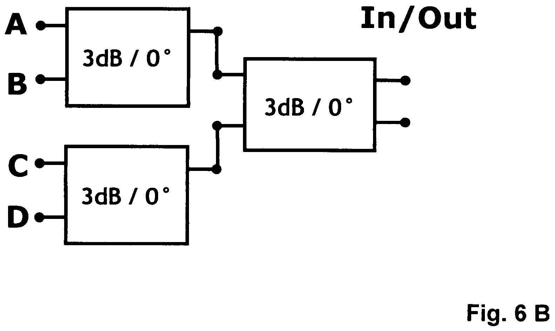

Fig. 6A zeigt in perspektivischer Darstellung eine Ausführungsform der Abstandsmessvorrichtung 2 mit einem Leitungsübergang 6 mit vier zueinander um 90 Grad versetzten Modentransformatoren 4 an einem Zylinder 7 für die Einkopplung einer koaxialen Welle und die Transformation in eine linear polarisierte Welle im E01-Mode. Die Einkopplung erfolgt gleichphasig (Fig. 6B) bei alle vier Modentransformatoren 4, die mechanische jeweils um 90 Grad versetzt angeordnet sind.

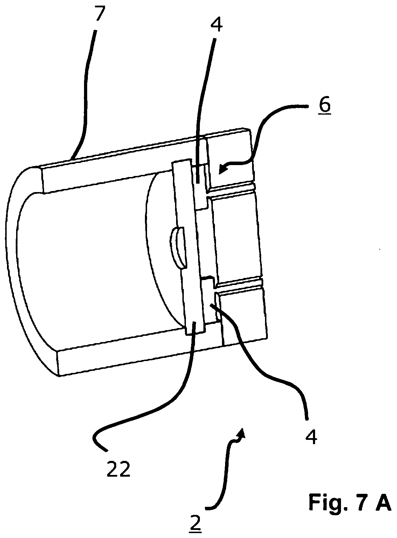

Fig. 7A zeigt in Schnittdarstellung eine Ausführungsform der Abstandsmessvorrichtung 2 mit einem Leitungsübergang 6 und einer dielektrischen Scheibe 22 an einem Zylinder 7, wobei der Leitungsübergang 6 einstufige Modentransformatoren 4 aufweist. Die dielektrische Scheibe 22 ist im Abkoppelbereich der Hohlleiterwelle angebracht. Durch die höhere Dielektrizitätszahl der dielektrischen Scheibe 22 verglichen mit Luft erfolgt eine Verkürzung der Einschwingstrecke der elektromagnetischen Welle in den gewünschten Mode, z.B. H11-Mode. Gleichzeitig kann die dielektrische Scheibe 22 als mechanischer Anschlag für den Kolben (in Fig. 7A nicht dargestellt) dienen. Die Konfiguration führt zu einer extrem kurzen Bauform, insbesondere des Leitungsübergangs, mit einstufigen Modentransformatoren.

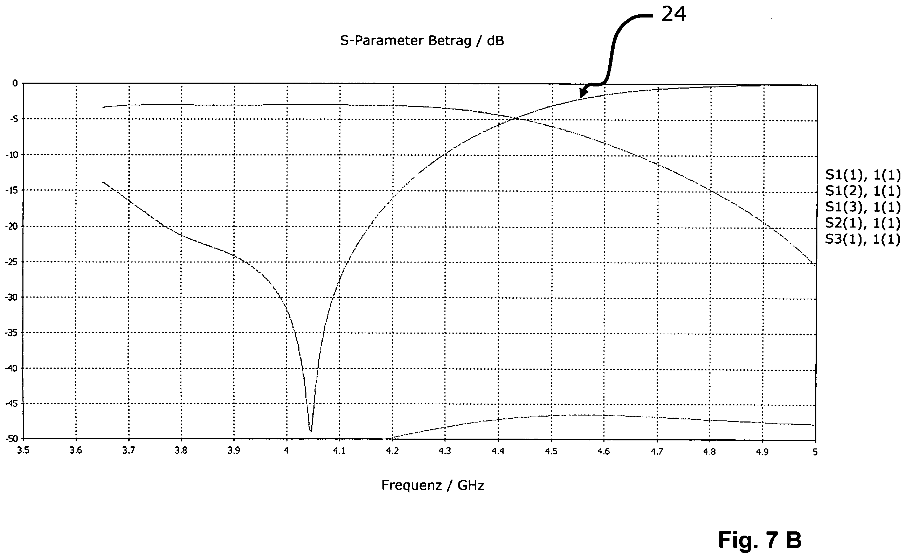

In Fig. 7B sind die S-Parameter der Anordnung gemäß Fig. 7A graphisch darstellt. Im gezeigten Beispiel wird für einen Frequenzbereich von 3.8 GHz bis 4.15 GHz eine besser Anpassung als 20 dB erreicht (siehe S11-Kurve, 24).

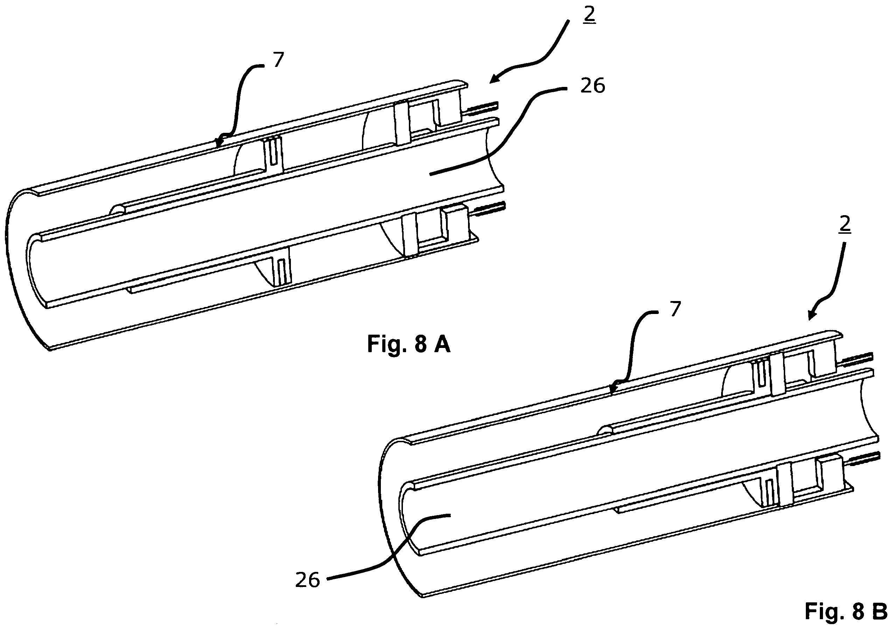

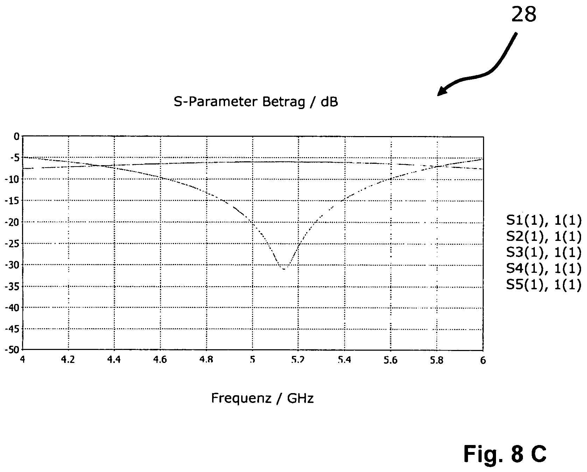

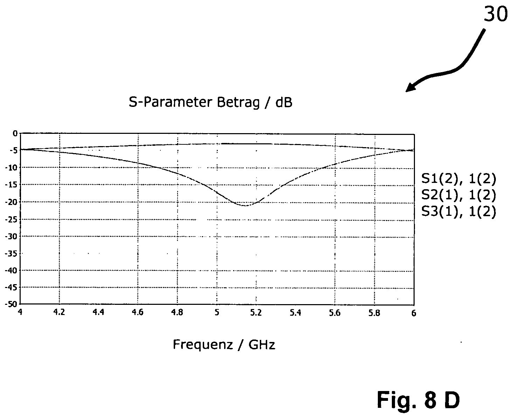

Figuren 8A und 8B zeigen in Schnittdarstellung Ausführungsformen der Abstandsmessvorrichtung 2 an einem Zylinder 7 mit dem Funktionsprinzip der durchgehenden Kolbenstange 26. Auch für diese Ausführungsform ist der vorgeschlagene, induktive Modentransformator 4 einsetzbar. Für dieses koaxiale Hohlleitersystem wird jedoch vorzugsweise der TEM-Mode 28 (Fig. 8C) angeregt, wobei durch Inkaufnahme geringer Leistungseinbußen bzgl. der Anpassung auch der H11-Mode 30 (Fig. 8D) angeregt werden kann.

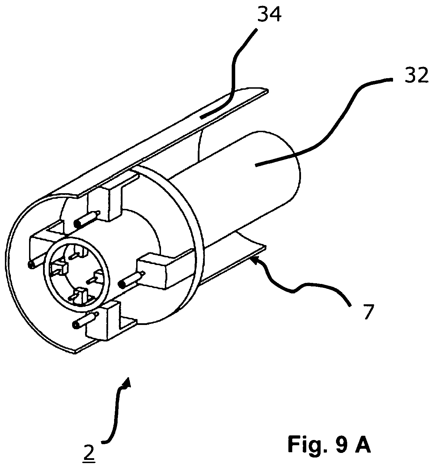

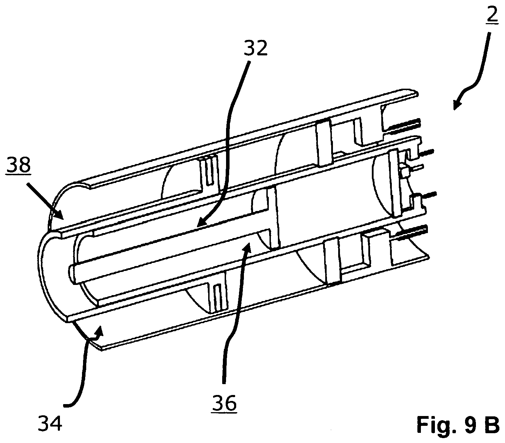

Figuren 9A und 9B zeigen in perspektivischer Darstellung bzw. in Schnittdarstellung Ausführungsformen der Abstandsmessvorrichtung 2 an einem Zylinder 7 mit Doppelkolbenstangen 32, 34. Dabei laufen zwei oder mehrere Kolbenstangen 32, 34 ineinander und zwar unabhängig voneinander. Durch Kombination der Funktionsprinzipien lässt sich die Kolbenposition des ganz innen laufenden Kolbens 36 mit einem System aus Figuren 2 bis 7 und die der äußeren Kolben 38 mit einer Anordnung aus Figuren 8A und 8B unabhängig voneinander detektieren. In Fig. 9B ist das Doppelkolbensystem durch einen Innenkolben 36 und einen Außenkolben 38 dargestellt.

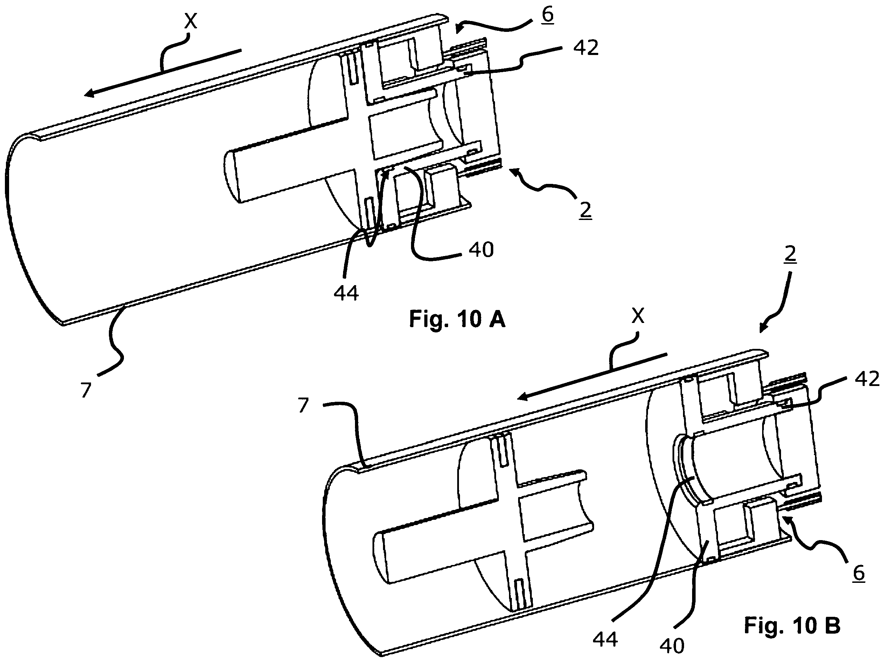

Figuren 10A und 10B zeigen in Schnittdarstellung Ausführungsformen der Abstandsmessvorrichtung 2 mit einem Leitungsübergang 6 und hutförmig oder kragenförmig ausgebildeter dielektrischer Scheibe 40 an einem Zylinder 7. Im rohrförmigen Innenbereich 42 befindet sich eine in x-Richtung bewegliche Dichtung 44. Mit dieser Anordnung ist es möglich eine pneumatische Endlagendämpfung zu realisieren.

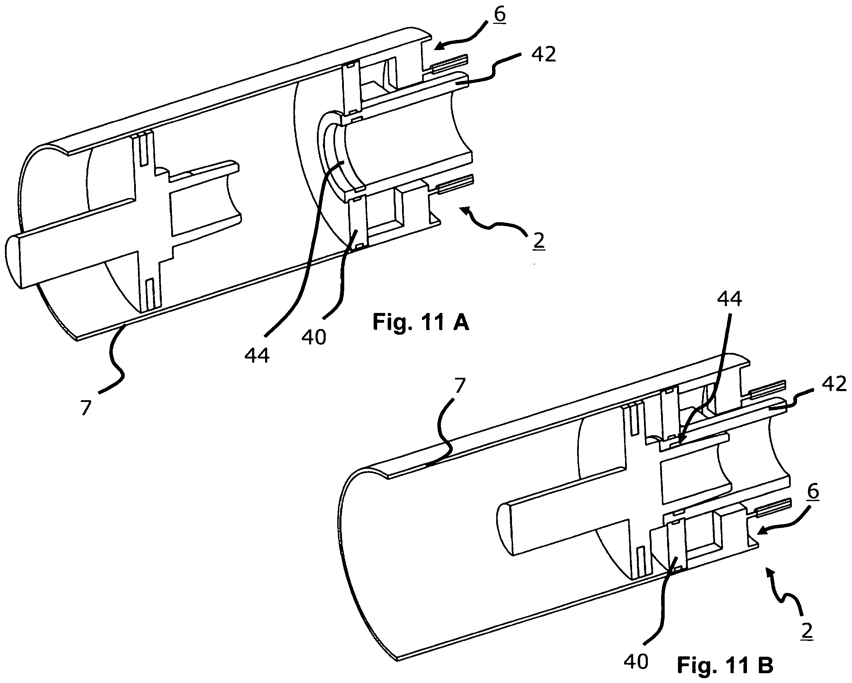

Figuren 11A und 11B zeigen in Schnittdarstellung Ausführungsformen der Abstandsmessvorrichtung 2 gemäß Figuren 10A und 10B, wobei der als Dämpfungsrohr (rohrförmiger Innenbereich 42) fungierende Hut bzw. Kragen metallisch ausgebildet ist.

Um die Entfernung zwischen Kolben und Sensor kontinuierlich messen zu können, muss das Sendesignal moduliert werden. Dies kann in Form einer Frequenzmodulation erfolgen. Um hierbei eine hohe Entfernungsauflösung zu erzielen ist jedoch ein großer Frequenzhub erforderlich. In der Praxis vorteilhafter ist das Aussenden eines CW Signals, z. B. bei unterschiedlichen Frequenzen zur Festlegung eines eindeutigen Entfernungsbereiches (Ambiguity Funktion!) mit jeweils anschließender Auswertung der Phasendifferenz zwischen Sende- und Empfangssignal als hochgenauen Messwert für die Entfernung zwischen Sensor und Messkolben. Die Zahl der zu verwendenden Frequenzen sowie deren Lage ist in erster Linie abhängig vom maximal zu messenden Abstand sowie von der notwendigen Fehlertoleranz gegenüber der Phasenwinkelmessung. Generell ist bei kleiner Frequenzdifferenz zwischen zwei Messfrequenzen der maximal messbare Abstand größer, allerdings bedingt die Unterscheidung zweier aufeinander folgender Perioden eine höhere Genauigkeit der Phasenwinkelmessung als bei größerer Frequenzdifferenz. Die Störsicherheit ist deshalb bei größeren Differenzen zwischen den einzelnen Messdifferenzen höher.

Soll ein großer Messbereich mit ausreichender Störsicherheit gemessen werden, so sind mehrere Messfrequenzen mit geeigneter Frequenzlage notwendig. Dadurch sind dann Frequenzpaare sowohl mit kleiner Differenz der Sendefrequenz (großer Messbereich) als auch mit großer Frequenzdifferenz (Störsicherheit) erforderlich. Die Positionsgenauigkeit ist im wesentlichen bestimmt durch die Genauigkeit der Phasenwinkelmessung bei der höchsten Messfrequenz, weil dort die Wellenlänge am kleinsten ist. Es gilt die Formel:

$$\text{Wegänderung} = \text{Phasenwinkeländerung} \times \text{Wellenlänge} / 180\ \text{Grad.}$$

Eine wesentliche Verbesserung der Messgenauigkeit lässt sich außerdem erreichen, wenn mehrere Signale unterschiedlicher Polarisation ausgewertet werden. So lässt sich gleichzeitig eine elektromagnetische Welle mit horizontaler und eine mit vertikaler Polarisation anregen wenn z.B. zwei Modentransformatoren im Abstand 90 Grad vorhanden sind. Als noch vorteilhafter hat sich die Auswertung einer zirkular polarisierten elektromagnetischen Welle erwiesen. Sendet man z. B. eine linkszirkulare Welle, dann wird diese am Kolben reflektiert (Totalreflexion) und ändert aufgrund des Phasensprunges von 180 Grad die Polarisationsrichtung. Die eingekoppelte linkszirkulare Welle wird als rechtszirkulare Welle empfangen. Störechos hingegen behalten die Drehrichtung bei und werden als linkszirkulare Welle empfangen. Über ein Speisenetzwerk, beispielsweise einen Branchline-Koppler, werden beide Signale als horizontal bzw. vertikal polarisierte Welle ausgekoppelt und weiterverarbeitet. Die Störechos erscheinen dann z. B. im Empfangskanal der vertikal polarisierten Welle, während die Nutzinformation (=Kolbenposition) im Empfangskanal der horizontal polarisierten Welle erscheint.

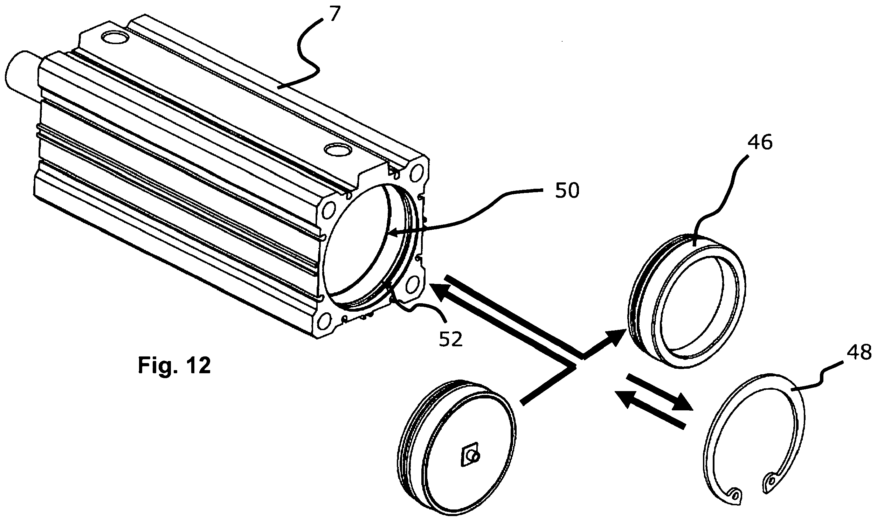

In Fig. 12 ist eine weitere Ausführungsform einer Abstandsmessvorrichtung 2 gezeigt, womit ein als Leitungsabschluss fungierender Enddeckel 46 am Hohlzylinder 7 ersetzt wird. Der zwischen einem Klemmring 48 und einem am Hohlzylinder 7 vorgesehenen Absatz 50 fixierte Enddeckel 48 kann durch Herauslösen des Klemmrings 48 aus einer am Hohlzylinder 7 vorgesehenen Einkerbung 52 vom Hohlzylinder 7 demontiert werden. Nachfolgend kann die Abstandsmessvorrichtung 2 ohne weitere Anpassungen an der Abstandsmessvorrichtung 2 oder am Hohlzylinder 7 in diesen bis zum Absatz 50 als Anschlag eingesetzt und durch den Klemmring 52 fixiert werden. Zum Anschlag der Abstandsmessvorrichtung 2 am Absatz 50 des Hohlzylinders 7 ist der Durchmesser der Abstandsmessvorrichtung 2 entsprechend dimensioniert.

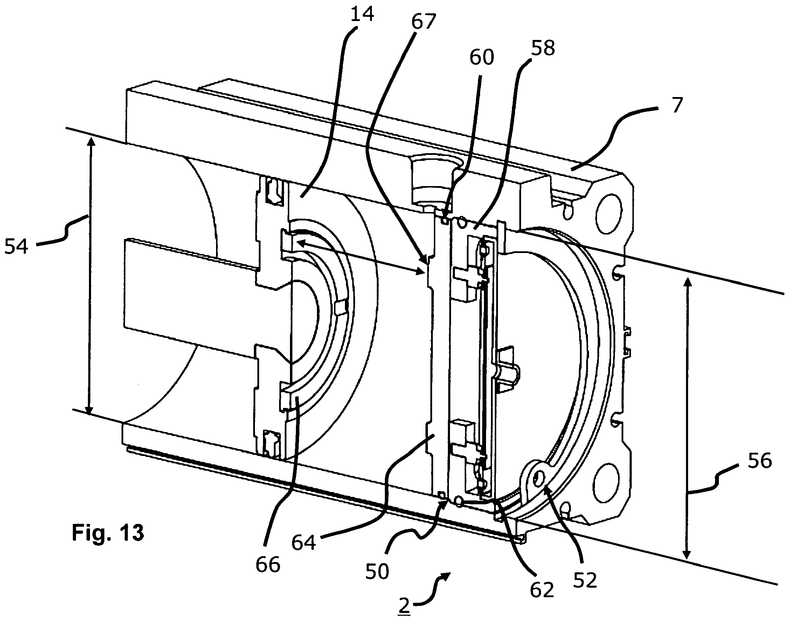

Fig. 13 zeigt in Schnittdarstellung die Ausführungsform gemäß Fig. 12 mit der im Hohlzylinder 7 eingesetzten und über den Klemmring 52 fixierten Abstandsmessvorrichtung 2. Kolbenseitig schlägt die Abstandsmessvorrichtung 2 an den Absatz 50 des Hohlzylinders 7 an, da ein Innendurchmesser 54 des Hohlzylinders 7 am Absatz 50 kleiner als ein Außendurchmesser 56 eines Metallkörpers 58 dimensioniert ist. Zur Abdichtung des Hohlraums zwischen dem Kolben 14 und der Abstandsmessvorrichtung 2 sind an dieser zwei Dichtungen 60, 62 vorgesehen, wobei die dem Kolben 14 zugewandte Dichtung 60 als Druckdichtung und die dem Kolben 14 abgewandte Dichtung 62 als Hochfrequenzdichtung fungieren. Zur pneumatischen Dämpfung des Kolbens 14 und zur Vermeidung eines Zusammenstoßes des Kolbens 14 und einer an der Abstandsmessvorrichtung 2 angeordneten dielektrischen Außenscheibe 64 ist zumindest am Kolben 14 ein Dämpfungselement 66 vorgesehen, welches mit einem an der dielektrischen Außenscheibe 64 vorgesehenen Absatz 67 zusammenwirkt.

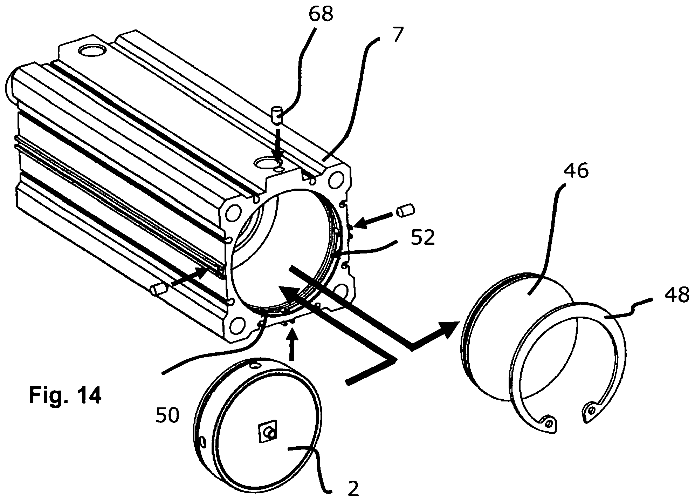

In Fig. 14 ist eine weitere Ausführungsform einer Abstandsmessvorrichtung 2 gezeigt, womit ein als Leitungsabschluss fungierender Enddeckel 46 am Hohlzylinder 7 ersetzt wird. Der zwischen dem Klemmring 48 und dem am Hohlzylinder 7 vorgesehenen Absatz 50 fixierte Enddeckel 48 kann durch Herauslösen des Klemmrings 48 aus der am Hohlzylinder 7 vorgesehenen Einkerbung 52 vom Hohlzylinder 7 demontiert werden. Nachfolgend kann die Abstandsmessvorrichtung 2 ohne weitere Anpassungen an der Abstandsmessvorrichtung 2 oder am Hohlzylinder 7 in diesen bis zum Absatz 50 als Anschlag eingesetzt und im vorliegenden Ausführungsbeispiel durch Sicherungsschrauben 68 fixiert werden.

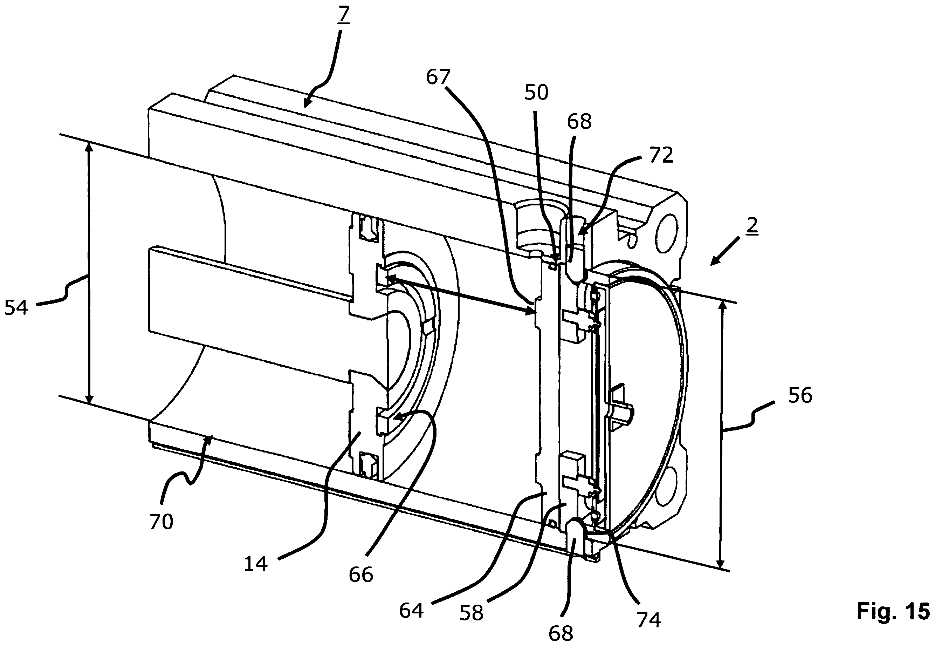

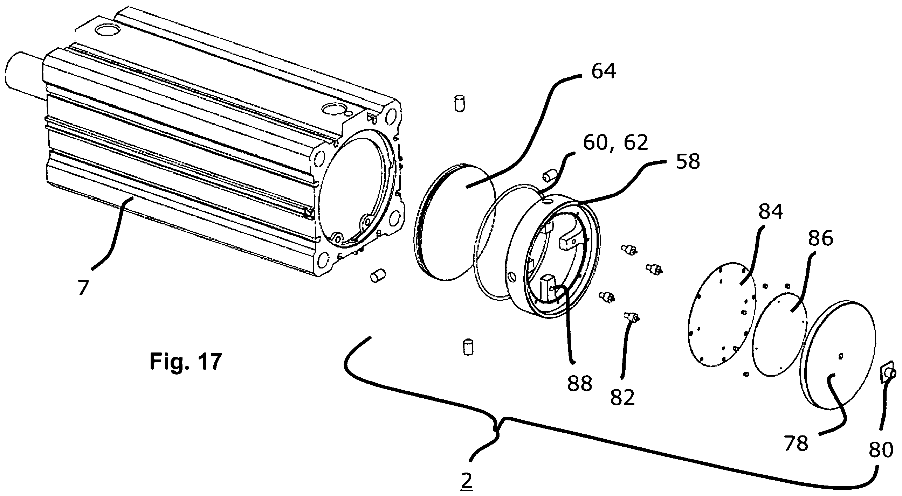

Fig. 15 zeigt in Schnittdarstellung die Ausführungsform gemäß Fig. 14 mit der im Hohlzylinder 7 eingesetzten und über die Sicherungsschrauben 68 fixierten Abstandsmessvorrichtung 2. Kolbenseitig schlägt die Abstandsmessvorrichtung 2 an den Absatz 50 des Hohlzylinders 7 an, da der Innendurchmesser 54 des Hohlzylinders 7 am Absatz 50 kleiner als der Außendurchmesser 56 des Metallkörpers 58 dimensioniert ist. Zur pneumatischen Dämpfung des Kolbens 14 und zur Vermeidung eines Zusammenstoßes des Kolbens 14 und der an der Abstandsmessvorrichtung 2 angeordneten dielektrischen Außenscheibe 64 ist zumindest am Kolben 14 das Dämpfungselement 66 vorgesehen, welches mit dem an der dielektrischen Außenscheibe 64 vorgesehenen Absatz 67 zusammenwirkt. Im vorliegenden Ausführungsbeispiel ist die Sicherung der Abstandsmessvorrichtung 2 im Hohlzylinder 7 durch die Sicherungsschrauben 68 verwirklicht. Alternativ oder in Kombination können auch Sicherungsstifte verwendet werden. Im vorliegenden Ausführungsbeispiel sind die Sicherungsschrauben 68 auf einer dem Innenmantel 70 des Hohlzylinders 7 folgenden Kreisbahn im Winkel von 90 Grad zueinander versetzt angeordnet (Fig. 17) und in im Hohlzylinder 7 vorgesehenen Bohrungen 72 sowie in in der Abstandsmessvorrichtung 2 vorgesehenen Vertiefungen 74, welche den Bohrungen 72 bei endmontierter Abstandsmessvorrichtung 2 gegenüber liegen, versenkt und durch Schraubverbindungen fixiert.

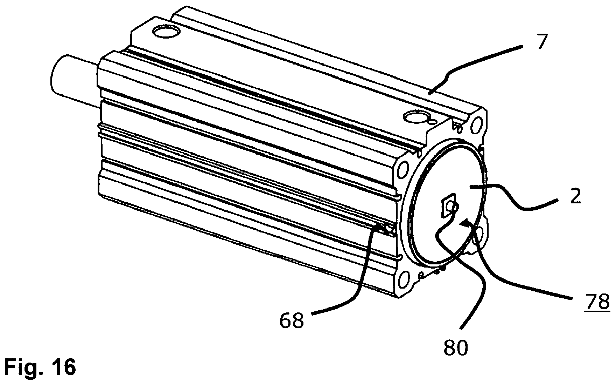

Fig. 16 zeigt in perspektivischer Darstellung die Ausführungsform gemäß Fig. 14 mit der im Hohlzylinder 7 eingesetzten und über die Sicherungsschrauben 68 fixierten Abstandsmessvorrichtung 2. Die den Leitungsabschluss des Hohlzylinders 7 ausbildende Abstandsmessvorrichtung 2 schließt auf der vom Hohlzylinder 7 abgewandten Seite mit einer Endscheibe 78 und einem Anschluss 80 zur elektrischen Kontaktierung der Abstandsmessvorrichtung 2 ab.

Fig. 17 zeigt die Ausführungsform gemäß Fig. 15 in Explosionsdarstellung, insbesondere der Abstandsmessvorrichtung 2, welche an einer dem Hohlzylinder 7 zugewandten Seite mit der dielektrischen Außenscheibe 64 abschließt und in Richtung der dem Hohlzylinder 7 abgewandten Seite, den Dichtungsring 60, 62, den Metallkörper 58, Koaxialdurchführungen 82, eine Scheibe 84, eine die Elektronik aufweisende Platine 86 sowie die Endscheibe 78 und den Anschluss 80 umfasst. die Einkopplung der elektromagnetischen Wellen erfolgt über die mit der Elektronik auf der Platine 86 und mit dem Metallkörper 58 über an diesem vorgesehene Ansätze 88 elektrisch leitend verbundenen Koaxialdurchführungen 82.

Allgemein sollte festgehalten werden, dass das Messverfahren, welches die induktive Einspeisung betrifft, ebenso für eine kapazitive Einspeisung anwendbar ist.

## Patentansprüche

1. Abstandsmessvorrichtung (2) zur Ermittlung eines Abstands zwischen einem Reflexionskörper in einer als Hohlzylinder (7) ausgebildeten Leitungsstruktur und einem an einem Endabschnitt der Leitungsstruktur vorgesehenen Einkopplungspunkt für elektromagnetische Wellen, mit einer Sende- und Empfangseinrichtung mit einem am Einkopplungspunkt vorgesehenen Leitungsübergang (6) zur induktiven Kopplung der Sende- und Empfangseinrichtung mit der Leitungsstruktur, um eine elektromagnetische Welle über einen Modentransformator (4) in die Leitungsstruktur einzukoppeln und die am Reflexionskörper reflektierte elektromagnetische Welle aus der Leitungsstruktur auszukoppeln, und

mit einer Auswerteeinrichtung zur Ermittlung des Abstands zwischen dem Einkopplungspunkt und dem Reflexionskörper aus der Phasendifferenz zwischen der eingekoppelten elektromagnetischen Welle und der ausgekoppelten elektromagnetischen Welle, **dadurch gekennzeichnet, dass** der Modentransformator als mechanische Treppenstufe ausgebildet ist, und die mechanische Treppenstufe mit abnehmender Stufenhöhe in Richtung des Reflexionskörpers an der Innenwandung des Hohlzylinders der Leitungsstruktur angeordnet ist.

2. Abstandsmessvorrichtung nach Anspruch 1, **dadurch gekennzeichnet, dass** der Hohlzylinder (7) als pneumatischer oder hydraulischer Zylinder oder Messzylinder ausgebildet ist, wobei im Hohlzylinder (7) ein Kolben (36, 38) vorgesehen ist, welcher als Reflexionskörper fungiert.

3. Abstandsmessvorrichtung nach Anspruch 1 oder 2, **dadurch gekennzeichnet, dass** die Einkopplung der elektromagnetischen Welle in die Leitungsstruktur im Frequenzbereich zwischen 1 MHz und 100 GHz in Form einer monomodigen elektromagnetischen Welle erfolgt, und die Einkopplung der elektromagnetischen Welle in die Leitungsstruktur im H11- oder E01-Mode oder bei koaxialer Leiterstruktur im TEM Mode erfolgt.

4. Abstandsmessvorrichtung nach einem der Ansprüche 1 bis 3, **dadurch gekennzeichnet, dass** eine linear polarisierte, elektromagnetische Welle im E01-Mode durch gleichphasige Einkopplung einer Koaxialwelle in die Leitungsstruktur über einen elektrisch leitenden, induktiven Modentransformator (4) des Leitungsübergangs (6) oder über zwei oder vier elektrisch leitende, induktive Modentransformatoren (4) des Leitungsübergangs (6) erzeugbar ist.

5. Abstandsmessvorrichtung nach Anspruch 1 bis 4, **dadurch gekennzeichnet, dass** der Leitungsübergang (6) einen elektrisch leitenden, induktiven Modentransformator (4) aufweist, worüber eine horizontal oder vertikal linear polarisierte, elektromagnetische Welle in die Leitungsstruktur einkoppelbar ist, oder der Leitungsübergang (6) zwei elektrisch leitende, induktive Modentransformatoren (4) aufweist, welche um 180 Grad zueinander versetzt auf einer Kreisbahn eines im Bereich des Endabschnitts vorgesehenen Kreises angeordnet und worüber linear polarisierte, elektromagnetische Wellen, welche zueinander um 180 Grad phasenverschoben sind, in die Leitungsstruktur einkoppelbar sind, oder

der Leitungsübergang (6) zwei elektrisch leitende, induktive Modentransformatoren (4) aufweist, welche um 90 Grad zueinander versetzt auf einer Kreisbahn eines im Bereich des Endabschnitts vorgesehenen Kreises angeordnet und worüber vertikal bzw. horizontal polarisierte, elektromagnetische Wellen parallel in die Leitungsstruktur einkoppelbar sind, oder

der Leitungsübergang (6) vier elektrisch leitende, induktive Modentransformatoren (4) aufweist, welche um 90 Grad zueinander versetzt auf einer Kreisbahn eines im Bereich des Endabschnitts vorgesehenen Kreises angeordnet sind, und wobei vertikal polarisierte, elektromagnetische Wellen, welche zueinander um 180 Grad phasenverschoben sind, über zwei zueinander um 180 Grad versetzte Modentransformatoren (4) und horizontal polarisierte, elektromagnetische Wellen, welche zueinander um 180 Grad phasenverschoben sind, über zwei zueinander um 180 Grad versetzte Modentransformatoren (4), welche zu den Modentransformatoren (4) für die vertikal polarisierten, elektromagnetischen Wellen um jeweils 90 Grad versetzt sind, parallel in die Leitungsstruktur einkoppelbar sind, oder der Leitungsübergang (6) zwei elektrisch leitende, induktive Modentransformatoren (4) aufweist, welche um 90 Grad zueinander versetzt auf einer Kreisbahn eines im Bereich des Endabschnitts vorgesehenen Kreises angeordnet und worüber jeweils eine linear zirkular polarisierte, elektromagnetische Welle, welche zueinander um 90 Grad phasenverschoben sind, in die Leitungsstruktur einkoppelbar sind, oder der Leitungsübergang (6) vier elektrisch leitende, induktive Modentransformatoren (4) aufweist, welche um 90 Grad zueinander versetzt auf einer Kreisbahn eines im Bereich des Endanschnittes vorgesehenen Kreises angeordnet sind und worüber zirkular polarisierte, elektromagnetische Wellen einkoppelbar sind, welche z.B. im Uhrzeigersinn um jeweils 90 Grad phasenverschoben eingespeist werden.

6. Abstandsmessvorrichtung nach Anspruch 1 bis 5, **dadurch gekennzeichnet, dass**
die jeweilige Treppenstufe zwei- (16), drei- (18), vier- (20) oder mehrstufig ausgeführt ist, wobei
der Leitungsübergang (6) zur Kopplung der Sende- und Empfangseinrichtung mit der Leitungsstruktur die Kontaktierung zwischen dem jeweiligen Modentransformator (4) und einem koaxialen Innenleiter aufweist, welcher leitungsstrukturendseitig in die Rückfläche der höchsten Stufe der mechanischen Treppenstufe des Modentransformators (4) eingesteckt ist, und zwischen der Rückfläche der höchsten Stufe der mechanischen Treppenstufe und einer als Endabschnitt ausgebildeten Deckelrückwand der Leitungsstruktur ein Abstand von einigen Millimetern vorgesehen ist.

7. Abstandsmessvorrichtung nach Anspruch 1 bis 6, **dadurch gekennzeichnet, dass**
die Sende- und Empfangseinrichtung für den jeweiligen Modentransformator (4) einen Branchline-Koppler und einen diesem nachgeschalteten Koppler mit 3dB-Kopplung und mit einer Phasendrehung von 180 Grad aufweist, und/oder die Sende- und Empfangseinrichtung zur gleichzeitigen Erfassung der vertikal und horizontal polarisierten Wellen einen 2-Kanal-Empfänger aufweist.

8. Abstandsmessvorrichtung nach Anspruch 1 bis 7, **dadurch gekennzeichnet, dass**
die induktiven Modentransformatoren (4) für Mehrfachkolbensysteme mit mindestens einem Außenkolben (38) und mindestens einem Innenkolben (36) dazu ausgebildet sind, zur Detektion des Abstands zwischen dem Außenkolben (38) bzw. dem Innenkolben (36) und dem Einkopplungspunkt sowohl die vom Außenkolben (38) reflektierte als auch die vom Innenkolben (36) reflektierte elektromagnetische Welle auszukoppeln.

9. Abstandsmessvorrichtung nach Anspruch 1 bis 8, **dadurch gekennzeichnet, dass**
zwischen dem Reflexionskörper und den Modentransformatoren (4) eine an diese anschließende dielektrische Scheibe (22,40), vorzugsweise aus Lexan, PPS 40 oder Teflon, über den gesamten Innendurchmesser der Leitungsstruktur vorgesehen ist, und/oder
die dielektrische Scheibe (40) mittig mit einem Innenrohr (42) versehen ist, so dass ein Dämpfungskolben in das Innenrohr (42) eintauchen kann, und das Innenrohr (42) metallisch ausgeführt ist.

10. Abstandsmessvorrichtung nach Anspruch 9, **dadurch gekennzeichnet, dass**
die dielektrische Scheibe (22,40) als Kolbenanschlag fungiert, oder
in der Leitungsstruktur ein Kolbenanschlag (10,12) vorgesehen ist, welcher als zwei Viertelkreisringe (10,12) mit der Leitungsstruktur zusammenwirkt.

11. Abstandsmessvorrichtung nach einem der Ansprüche 1 bis 10, **dadurch gekennzeichnet, dass** die Abstandsmessvorrichtung als Endabschnitt der Leitungsstruktur ausgebildet ist, und/oder
die Abstandsmessvorrichtung abnehmbar an der Leitungsstruktur angeordnet ist, und/oder
die Abstandsmessvorrichtung an der dem Reflexionskörper zugewandten Seite in der Leitungsstruktur durch eine an der Leitungsstruktur vorgesehene Vorwölbung gehaltert wird, welche mit der Abstandsmessvorrichtung zusammenwirkt, und/oder die Abstandsmessvorrichtung an der dem Reflexionskörper abgewandten Seite in der Leitungsstruktur durch einen Klemmring gehaltert wird, welcher mit der Leitungsstruktur und dem Endabschnitt zusammenwirkt, oder die Abstandsmessvorrichtung in der Leitungsstruktur durch mindestens einen Sicherungsstift gehaltert wird, welcher mit der Leitungsstruktur und dem Endabschnitt zusammenwirkt, und
zwischen der Abstandsmessvorrichtung und der Leitungsstruktur eine Dichtung vorgesehen ist, und
die Dichtung als Dichtungsring ausgebildet ist.

12. Verfahren zur Ermittlung eines Abstands zwischen einem Reflexionskörper in einer als Hohlzylinder ausgebildeten Leitungsstruktur und einem an einem Endabschnitt der Leitungsstruktur vorgesehenen Einkopplungspunkt für elektromagnetische Wellen, mit den Verfahrensschritten:

Einkopplung einer elektromagnetischen Welle in die Leitungsstruktur über einen als Modentransformator ausgebildeten Leitungsübergang (6) am Einkopplungspunkt, wobei der Modentransformator als mechanische Treppenstufe ausgebildet ist, und die mechanische Treppenstufe mit abnehmender Stufenhöhe in Richtung des Reflexionskörpers an der Innenwandung des Hohlzylinders der Leitungsstruktur angeordnet ist.
Auskopplung der am Reflexionskörper reflektierten elektromagnetischen Welle aus der Leitungsstruktur über den Leitungsübergang (6); und
Ermittlung des Abstands zwischen dem Einkopplungspunkt und dem Reflexionskörper aus der Phasendifferenz zwischen der eingekoppelten und der ausgekoppelten elektromagnetischen Welle.

13. Verfahren nach Anspruch 12, **dadurch gekennzeichnet, dass** die elektromagnetische Welle im E01-Mode oder im H11-Mode oder bei koaxialer Leiterstruktur im TEM Mode in die Leitungsstruktur eingekoppelt wird, wobei mit der elektromagnetischen Welle Sendesignale mit unterschiedlichen Sendefrequenzen eingekoppelt werden, und die Sendefrequenzen derart gewählt werden, dass die Differenz zwischen den Sendefrequenzen klein ist, z.B. 1 % Differenz vom Absolutwert, um einen großen Messbereich abzudecken, oder
die Sendefrequenzen derart gewählt werden, dass die Differenz zwischen den Sendefrequenzen groß ist, z.B. 20% Differenz vom Absolutwert, um eine hohe Störsicherheit zu erzielen.

14. Verfahren nach Anspruch 12 oder 13, **dadurch gekennzeichnet, dass** die über die elektromagnetische Welle ausgestrahlten Sendesignale kontinuierlich abgegeben werden, und

mit der elektromagnetischen Welle als CW-Signale ausgebildete Sendesignale eingekoppelt werden, und/oder vertikal und horizontal polarisiert ausgebildete elektromagnetische Wellen parallel ausgewertet werden, und/oder eine links- oder rechtsdrehende elektromagnetische Welle bei zirkularer Polarisation mittels eines Branchline-Kopplers in eine horizontal bzw. vertikal polarisierte elektromagnetische Welle umgewandelt wird, und/oder die Totalreflexion am Reflexionskörper bei zirkularer Polarisation zur Umkehr der Drehrichtung führt, d.h. aus einer linkszirkularen Welle wird eine rechtszirkulare Welle oder umgekehrt und dies die eindeutige Kolbendetektion ermöglicht.

**15.** Verfahren zur Modifizierung einer Leitungsstruktur mit einer Abstandsmessvorrichtung nach einem der Ansprüche 1 bis 10 oder 14, **dadurch gekennzeichnet, dass** eine dem Reflexionskörper gegenüberliegende, als Endabschnitt der Leitungsstruktur ausgebildete Deckelrückwand aus der Leitungsstruktur entfernt und durch die Abstandsmessvorrichtung, welche als Endabschnitt ausgebildet ist, ersetzt wird.

**Claims**

1. Distance measuring device (2) for determining a distance between a reflective body in a line structure formed as a hollow cylinder (7) and a coupling-in point for electromagnetic waves provided at an end portion of the line structure, comprising a transmitting and receiving device with a line junction (6), provided at the coupling-in point, for the inductive coupling of the transmitting and receiving device to the line structure, in order to couple an electromagnetic wave into the line structure by way of a mode transformer (4) and couple the electromagnetic wave reflected at the reflective body out of the line structure, and with an evaluating device for determining the distance between the coupling-in point and the reflective body from the phase difference between the coupled-in electromagnetic wave and the coupled-out electromagnetic wave, **characterized in that** the mode transformer is formed as a mechanical stairway, and the mechanical stairway is arranged with decreasing step height in the direction of the reflective body on the inner wall of the hollow cylinder of the line structure.

2. Distance measuring device according to Claim 1, **characterized in that** the hollow cylinder (7) is formed as a pneumatic or hydraulic cylinder or measuring cylinder, wherein a piston (36, 38), which acts as a reflective body, is provided in the hollow cylinder (7).

3. Distance measuring device according to Claim 1 or 2, **characterized in that** the coupling of the electromagnetic wave into the line structure takes place in the frequency range between 1 MHz and 100 GHz in the form of a monomodal electromagnetic wave, and the coupling of the electromagnetic wave into the line structure takes place in the H11 or E01 mode or, in the case of a coaxial conductor structure, in the TEM mode.

4. Distance measuring device according to one of Claims 1 to 3, **characterized in that** a linearly polarized, electromagnetic wave in the E01 mode can be generated by in-phase coupling of a coaxial wave into the line structure by way of an electrically conducting, inductive mode transformer (4) of the line junction (6) or by way of two or four electrically conducting, inductive mode transformers (4) of the line junction (6).

5. Distance measuring device according to Claims 1 to 4, **characterized in that** the line junction (6) comprises an electrically conducting, inductive mode transformer (4), by way of which a horizontally or vertically linearly polarized, electromagnetic wave can be coupled into the line structure, or

the line junction (6) comprises two electrically conducting, inductive mode transformers (4), which are arranged offset by 180 degrees in relation to one another on a circular path of a circle provided in the region of the end portion and by way of which linearly polarized, electromagnetic waves that are phase-shifted by 180 degrees in relation to one another can be coupled into the line structure, or

the line junction (6) comprises two electrically conducting, inductive mode transformers (4), which are arranged offset by 90 degrees in relation to one another on a circular path of a circle provided in the region of the end portion and by way of which vertically or horizontally polarized, electromagnetic waves can be coupled in parallel into the line structure, or

the line junction (6) comprises four electrically conducting, inductive mode transformers (4), which are arranged offset by 90 degrees in relation to one another on a circular path of a circle provided in the region of the end portion, and wherein vertically polarized, electromagnetic waves that are phase-shifted by 180 degrees in relation to one another can be coupled into the line structure in parallel by way of two mode transformers (4) offset by 180 degrees in relation to one another and horizontally polarized, electromagnetic waves that are phase-shifted by 180 degrees in relation to one another can be coupled into the line structure in parallel by way of two mode transformers (4) offset by 180 degrees in relation to one another and offset in relation to the mode transformers (4) for the vertically polarized, electromagnetic waves by 90 degrees, or

the line junction (6) comprises two electrically conducting, inductive mode transformers (4), which are arranged offset by 90 degrees in relation to one another on a circular path of a circle provided in the region of the end portion and by way of which in each case a linearly circularly polarized, electromagnetic wave that are phase-shifted by 90 degrees in relation to one another can be coupled into the line structure, or

the line junction (6) comprises four electrically conducting, inductive mode transformers (4), which are arranged offset by 90 degrees in relation to one another on a circular path of a circle provided in the region of the end portion and by way of which circularly polarized, electromagnetic waves that are for example fed in phase-shifted clockwise by 90 degrees in each case can be coupled in.

6.  Distance measuring device according to Claims 1 to 5, **characterized in that**
    the respective stairway is of a two-step (16), three-step (18), four-step (20) or multi-step configuration, wherein for coupling the transmitting and receiving device to the line structure, the line junction (6) comprises the contacting between the respective mode transformer (4) and a coaxial inner conductor, which at the line structure end is inserted into the rear surface of the highest step of the mechanical stairway of the mode transformer (4), and a distance of several millimetres is provided between the rear surface of the highest step of the mechanical stairway and a cover rear wall of the line structure that is formed as an end portion.

7.  Distance measuring device according to Claims 1 to 6, **characterized in that**
    the transmitting and receiving device comprises for the respective mode transformer (4) a branch line coupler and a coupler connected downstream thereof with 3 dB coupling and with a phase rotation of 180 degrees, and/or
    the transmitting and receiving device comprises for the simultaneous detection of the vertically and horizontally polarized waves a 2-channel receiver.

8.  Distance measuring device according to Claims 1 to 7, **characterized in that**
    the inductive mode transformers (4) for multi-piston systems with at least one outer piston (38) and at least one inner piston (36) are designed to couple out both the electromagnetic wave reflected by the outer piston (38) and the electromagnetic wave reflected by the inner piston (36) for the detection of the distance between the outer piston (38) or the inner piston (36) and the coupling-in point.

9.  Distance measuring device according to Claims 1 to 8, **characterized in that**
    between the reflective body and the mode transformers (4), a dielectric disc (22, 40) adjoining the latter, preferably made of Lexan, PPS 40 or Teflon, is provided over the entire inside diameter of the line structure, and/or
    the dielectric disc (40) is provided centrally with an inner tube (42), so that a damping piston can enter the inner tube (42), and the inner tube (42) is of a metal configuration.

10. Distance measuring device according to Claim 9, **characterized in that**
    the dielectric disc (22, 40) acts as a piston stop, or a piston stop (10, 12) is provided in the line structure and interacts as two quarter-circle rings (10, 12) with the line structure.

11. Distance measuring device according to one of Claims 1 to 10, **characterized in that** the distance measuring device is formed as an end portion of the line structure, and/or
    the distance measuring device is arranged removably on the line structure, and/or
    the distance measuring device is secured on the side facing the reflective body in the line structure by a convexity provided on the line structure that interacts with the distance measuring device, and/or
    the distance measuring device is secured on the side facing away from the reflective body in the line structure by a clamping ring that interacts with the line structure and the end portion, or
    the distance measuring device is secured in the line structure by at least one securing pin that interacts with the line structure and the end portion, and
    a seal is provided between the distance measuring device and the line structure, and
    the seal is formed as a sealing ring.

12. Method for determining a distance between a reflective body in a line structure formed as a hollow cylinder and a coupling-in point for electromagnetic waves provided at an end portion of the line structure, comprising the following method steps:

    coupling an electromagnetic wave into the line structure by way of a line junction (6) formed as a mode transformer at the coupling-in point, wherein the mode transformer is formed as a mechanical stairway, and the mechanical stairway is arranged with decreasing step height in the direction of the reflective body on the inner wall of the hollow cylinder of the line structure,

coupling of the electromagnetic wave reflected at the reflective body out of the line structure by way of the line junction (6); and

determination of the distance between the coupling-in point and the reflective body from the phase difference between the coupled-in electromagnetic wave and the coupled-out electromagnetic wave.

13. Method according to Claim 12, **characterized in that** the electromagnetic wave is coupled into the line structure in the E01 mode or in the H11 mode or, in the case of a coaxial conductor structure, in the TEM mode, wherein, with the electromagnetic wave, transmission signals are coupled in with different transmission frequencies, and the transmission frequencies are chosen in such a way that the difference between the transmission frequencies is small, for example a 1% difference from the absolute value, in order to cover a great measuring range, or the transmission frequencies are chosen in such a way that the difference between the transmission frequencies is great, for example a 20% difference from the absolute value, in order to achieve a high interference immunity.

14. Method according to Claim 12 or 13, **characterized in that** the transmission signals broadcast by way of the electromagnetic wave are emitted continuously, and with the electromagnetic wave, transmission signals formed as CW signals are coupled in, and/or electromagnetic waves formed vertically and horizontally polarized are evaluated in parallel, and/or in the case of circular polarization, a left-rotating or right-rotating electromagnetic wave is converted by means of a branch line coupler into a horizontally or vertically polarized electromagnetic wave, and/or in the case of circular polarization, the total reflection at the reflective body leads to the reversal of the direction of rotation, i.e. a left-circulating wave becomes a right-circulating wave, or vice versa, and this makes unequivocal piston detection possible.

15. Method for modifying a line structure by a distance measuring device according to one of Claims 1 to 10 or 14, **characterized in that** a cover rear wall opposite from the reflective body and formed as an end portion of the line structure is removed from the line structure and is replaced by the distance measuring device, which is formed as an end portion.

## Revendications

1. Dispositif de télémétrie (2) destiné à déterminer un écart entre un corps réfléchissant dans une structure de conduite réalisée sous la forme d'un cylindre creux (7) et un point d'injection pour des ondes électromagnétiques qui se trouve au niveau d'une portion d'extrémité de la structure de conduite, comprenant un dispositif d'émission et de réception pourvu d'une jonction de conduite (6) qui se trouve au niveau du point d'injection et est destiné au couplage inductif du dispositif d'émission et de réception avec la structure de conduite en vue d'injecter une onde électromagnétique dans la structure de conduite par le biais d'un transformateur de mode (4) et d'extraire l'onde électromagnétique réfléchie sur le corps réfléchissant hors de la structure de conduite, et comprenant un dispositif d'interprétation destiné à déterminer l'écart entre le point d'injection et le corps réfléchissant à partir de la différence de phase entre l'onde électromagnétique injectée et l'onde électromagnétique extraite, **caractérisé en ce que** le transformateur de mode est réalisé sous la forme d'une marche d'escalier mécanique et la marche d'escalier mécanique est disposée avec une hauteur de marche qui diminue en direction du corps réfléchissant contre la paroi intérieure du cylindre creux de la structure de conduite.

2. Dispositif de télémétrie selon la revendication 1, **caractérisé en ce que** le cylindre creux (7) est réalisé sous la forme d'un cylindre pneumatique ou hydraulique ou d'un cylindre de mesure, un piston (36, 38) étant présent dans le cylindre creux (7), lequel fait office de corps réfléchissant.

3. Dispositif de télémétrie selon la revendication 1 ou 2, **caractérisé en ce que** l'injection de l'onde électromagnétique dans la structure de conduite est effectuée dans la plage de fréquences entre 1 MHz et 100 GHz sous la forme d'une onde électromagnétique monomodale, et l'injection de l'onde électromagnétique dans la structure de conduite est effectuée en mode H11 ou E01 ou, dans le cas d'une structure de conducteur coaxiale, en mode TEM.

4. Dispositif de télémétrie selon l'une des revendications 1 à 3, **caractérisé en ce qu'**une onde électromagnétique à polarisation linéaire en mode E01 peut être générée par injection en phase d'une onde coaxiale dans la structure de conduite par le biais d'un transformateur de mode (4) inductif électriquement conducteur de la jonction de conduite (6) ou par le biais de deux ou quatre transformateurs de mode (4) inductifs électriquement conducteurs de la jonction de conduite (6).

**5.** Dispositif de télémétrie selon les revendications 1 à 4, **caractérisé en ce que** la jonction de conduite (6) possède un transformateur de mode (4) inductif électriquement conducteur par le biais duquel une onde électromagnétique à polarisation linéaire horizontale ou verticale peut être injectée dans la structure de conduite, ou la jonction de conduite (6) possède deux transformateurs de mode (4) inductifs électriquement conducteurs, lesquels sont disposés décalés de 180 degrés l'un par rapport à l'autre sur une trajectoire circulaire d'un cercle présent dans la zone de la portion d'extrémité et par le biais desquels des ondes électromagnétiques à polarisation linéaire, lesquelles sont déphasées de 180 degrés l'une par rapport à l'autre, peuvent être injectées dans la structure de conduite, ou la jonction de conduite (6) possède deux transformateurs de mode (4) inductifs électriquement conducteurs, lesquels sont disposés décalés de 90 degrés l'un par rapport à l'autre sur une trajectoire circulaire d'un cercle présent dans la zone de la portion d'extrémité et par le biais desquels des ondes électromagnétiques à polarisation verticale ou horizontale peuvent être injectées en parallèle dans la structure de conduite, ou

la jonction de conduite (6) possède quatre transformateurs de mode (4) inductifs électriquement conducteurs, lesquels sont disposés décalés de 90 degrés les uns par rapport aux autres sur une trajectoire circulaire d'un cercle présent dans la zone de la portion d'extrémité et des ondes électromagnétiques à polarisation verticale, lesquelles sont déphasées de 180 degrés les unes par rapport aux autres, peuvent être injectées en parallèle dans la structure de conduite par le biais de deux transformateurs de mode (4) décalés de 180 degrés l'un par rapport à l'autre et d'ondes électromagnétiques à polarisation horizontale, lesquelles sont déphasées de 180 degrés les unes par rapport aux autres, par le biais de deux transformateurs de mode (4) décalés de 180 degrés l'un par rapport à l'autre, lesquels sont respectivement décalés de 90 degrés par rapport aux transformateurs de mode (4) pour les ondes électromagnétiques à polarisation verticale, ou

la jonction de conduite (6) possède deux transformateurs de mode (4) inductifs électriquement conducteurs, lesquels sont disposés décalés de 90 degrés l'un par rapport à l'autre sur une trajectoire circulaire d'un cercle présent dans la zone de la portion d'extrémité et par le biais desquels à chaque fois une onde électromagnétique à polarisation circulaire linéaire, qui sont déphasées de 90 degrés par rapport à l'autre, peut être injectée dans la structure de conduite, ou

la jonction de conduite (6) possède quatre transformateurs de mode (4) inductifs électriquement conducteurs, lesquels sont disposés décalés de 90 degrés les uns par rapport aux autres sur une trajectoire circulaire d'un cercle présent dans la zone de la portion d'extrémité et par le biais desquels peuvent être injectées des ondes électromagnétiques à polarisation circulaire, lesquelles sont injectées déphasées respectivement de 90 degrés dans le sens des aiguilles d'une montre, par exemple.

**6.** Dispositif de télémétrie selon les revendications 1 à 5, **caractérisé en ce que** la marche d'escalier respective est exécutée avec deux (16), trois (18), quatre (20) ou plus de marches,
la jonction de conduite (6) possédant, en vue du couplage du dispositif d'émission et de réception avec la structure de conduite, la mise en contact entre le transformateur de mode (4) correspondant et un conducteur interne coaxial, lequel est inséré, du côté de la structure de conduite, dans la face arrière de la marche la plus haute de la marche d'escalier mécanique du transformateur de mode (4), et un espace de quelques millimètres étant prévu entre la face arrière de la marche la plus haute de la marche d'escalier mécanique et une paroi arrière de couvercle de la structure de conduite réalisée sous la forme d'une portion d'extrémité.

**7.** Dispositif de télémétrie selon les revendications 1 à 6, **caractérisé en ce que** le dispositif d'émission et de réception possède pour le transformateur de mode (4) correspondant un coupleur d'embranchement et un coupleur branché en aval de celui-ci avec un couplage de 3 dB et avec un déphasage de 180 degrés, et/ou
le dispositif d'émission et de réception possède un récepteur à 2 canaux pour la détection simultanée des ondes à polarisation verticale et horizontale.

**8.** Dispositif de télémétrie selon les revendications 1 à 7, **caractérisé en ce que** les transformateurs de mode (4) inductifs pour des systèmes à plusieurs pistons comportant au moins un piston externe (38) et au moins un piston interne (36), sont conçus, en vue de la détection de l'écart entre le piston externe (38) ou le piston interne (36) et le point d'injection, pour extraire à la fois l'onde électromagnétique réfléchie par le piston externe (38) et l'onde électromagnétique réfléchie par le piston interne (36).

**9.** Dispositif de télémétrie selon les revendications 1 à 8, **caractérisé en ce qu'**un disque diélectrique (22, 40), de préférence en Lexan, en PPS 40 ou en Téflon est présent sur tout le diamètre intérieur de la structure de conduite entre le corps réfléchissant et le transformateur de mode (4) en étant rattaché à ce dernier, et/ou
le disque diélectrique (40) est pourvu en son centre d'un tube intérieur (42), de sorte qu'un piston d'amortissement peut plonger dans le tube intérieur (42), et le tube intérieur (42) est d'exécution métallique.

**10.** Dispositif de télémétrie selon la revendication 9, **caractérisé en ce que** le disque diélectrique (22, 40) fait office de butée de piston, ou alors une butée de piston (10, 12) est présente dans la structure de conduite, laquelle coopère avec la structure de conduite sous la forme de deux bagues en quart de cercle (10, 12).

**11.** Dispositif de télémétrie selon l'une des revendications 1 à 10, **caractérisé en ce que** le dispositif de télémétrie est réalisé sous la forme d'une portion d'extrémité de la structure de conduite et/ou
le dispositif de télémétrie est monté de manière amovible sur la structure de conduite, et/ou le dispositif de télémétrie est maintenu dans la structure de conduite sur le côté faisant face au corps réfléchissant par une protubérance présente sur la structure de conduite, laquelle coopère avec le dispositif de télémétrie, et/ou
le dispositif de télémétrie est maintenu dans la structure de conduite sur le côté opposé au corps réfléchissant par une bague de serrage, laquelle coopère avec la structure de conduite et la portion d'extrémité, ou
le dispositif de télémétrie est maintenu dans la structure de conduite par au moins une goupille de blocage, laquelle coopère avec la structure de conduite et la portion d'extrémité, et
une garniture d'étanchéité se trouve entre le dispositif de télémétrie et la structure de conduite, et
la garniture d'étanchéité est réalisée sous la forme d'une bague d'étanchéité.

**12.** Procédé pour déterminer un écart entre un corps réfléchissant dans une structure de conduite réalisée sous la forme d'un cylindre creux et un point d'injection pour des ondes électromagnétiques qui se trouve au niveau d'une portion d'extrémité de la structure de conduite, comprenant les étapes suivantes :

injection d'une onde électromagnétique dans la structure de conduite en un point d'injection par le biais d'une jonction de conduite (6) réalisée sous la forme d'un transformateur de mode, le transformateur de mode étant réalisé sous la forme d'une marche d'escalier mécanique et la marche d'escalier mécanique étant disposée avec une hauteur de marche qui diminue en direction du corps réfléchissant contre la paroi intérieure du cylindre creux de la structure de conduite,
extraction de l'onde électromagnétique réfléchie sur le corps réfléchissant hors de la structure de conduite par le biais de la jonction de conduite (6), et
détermination de l'écart entre le point d'injection et le corps réfléchissant à partir de la différence de phase entre l'onde électromagnétique injectée et l'onde électromagnétique extraite.

**13.** Procédé selon la revendication 12, **caractérisé en ce que** l'onde électromagnétique est injectée dans la structure de conduite en mode H11 ou en mode E01 ou, dans le cas d'une structure de conducteur coaxiale, en mode TEM, des signaux d'émission ayant différentes fréquences d'émission étant injectés avec l'onde électromagnétique et les fréquences d'émission étant choisies de telle sorte que la différence entre les fréquences d'émission est faible, par exemple 1 % de différence par rapport à la valeur absolue, afin de couvrir une grande plage de mesure, ou les fréquences d'émission sont choisies de telle sorte que la différence entre les fréquences d'émission est élevée, par exemple 20 % de différence par rapport à la valeur absolue, afin d'obtenir une grande immunité aux perturbations.

**14.** Procédé selon la revendication 12 ou 13, **caractérisé en ce que** les signaux d'émission rayonnés par le biais de l'onde électromagnétique sont délivrés en continu, et
des signaux d'émission réalisés sous la forme de signaux à onde entretenue sont injectés avec l'onde électromagnétique, et/ou
des ondes électromagnétiques configurées avec une polarisation verticale et horizontale sont interprétées en parallèle, et/ou
dans le cas d'une polarisation circulaire, une onde électromagnétique à rotation à gauche ou à droite est convertie au moyen d'un coupleur d'embranchement en une onde électromagnétique à polarisation horizontale ou verticale, et/ou
la réflexion totale sur le corps réfléchissant dans le cas de la polarisation circulaire provoque une inversion du sens de rotation, ce qui veut dire qu'une onde avec rotation circulaire à gauche devient une onde avec rotation circulaire à droite ou inversement, et cela permet la détection proprement dite du piston.

**15.** Procédé pour modifier une structure de conduite avec un dispositif de télémétrie selon l'une des revendications 1 à 10 ou 14, **caractérisé en ce qu'**une paroi arrière de couvercle opposée au corps réfléchissant, réalisée sous la forme d'une portion d'extrémité de la structure de conduite, est retirée de la structure de conduite et remplacée par le dispositif de télémétrie, lequel est réalisé sous la forme d'une portion d'extrémité.

EP 2 350 572 B1

**Fig. 1**

Fig. 2 A

Fig. 2 B

Fig. 2 C

S-Parameter Betrag / dB

16

S1(1), 1(1)_2stufig (16)
S1(1), 1(1)_3stufig (18)
S1(1), 1(1)_4stufig (20)

20

18

Frequenz / GHz

**Fig. 2 D**

Fig. 3 A

A — 3dB / 90° — In/Out (TX + RX1)

B — 3dB / 90° — Out (RX2)

Fig. 3 B

EP 2 350 572 B1

Fig. 4 B

Fig. 4 A

Fig. 5 A

In
Out

3dB / 90°

3dB / 180°

3dB / 180°

A
B

C
D

Fig. 5 C

In/Out
vertikal

3dB / 180°

A
B

In/Out
horizontal

3dB / 180°

C
D

Fig. 5 B

Fig. 6 A

Fig. 6 B

Fig. 7 A

S-Parameter Betrag / dB

S1(1), 1(1)
S1(2), 1(1)
S1(3), 1(1)
S2(1), 1(1)
S3(1), 1(1)

24

Frequenz / GHz

Fig. 7 B

Fig. 8 A

Fig. 8 B

Fig. 8 C

30

S-Parameter Betrag / dB

S1(2), 1(2)
S2(1), 1(2)
S3(1), 1(2)

Frequenz / GHz

**Fig. 8 D**

Fig. 9 A

Fig. 9 B

Fig. 10 A

Fig. 10 B

Fig. 11 A

Fig. 11 B

Fig. 12

Fig. 13

Fig. 14

Fig. 15

EP 2 350 572 B1

Fig. 16

Fig. 17

64

60, 62

58

84

86

7

88

82

78

80

2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0300894 W